# FASCICULE DE BREVET EUROPEEN

(11) **EP 2 555 446 B1**
(45) Date de publication et mention de la délivrance du brevet: **10.07.2013**
(21) Numéro de dépôt: 12179007.5
(22) Date de dépôt: 02.08.2012
(51) Int. Cl.: H04B 7/185

(54) **Système et procédé de gestion multiple de ressources de transmission d'un système spatial de radiocommunication multicellulaire**
System und Verfahren zur Mehrfachsteuerung von Übertragungsressourcen eines multizellulären Funkkommunikationssystems im Weltraum
System and method for multiple management of transmission resources of a space system for multi-cell radio communication

(30) Priorité: 04.08.2011 FR 1157151
(43) Date de publication de la demande: 06.02.2013
(73) Titulaire: CENTRE NATIONAL D'ETUDES SPATIALES, 75001 Paris (FR)
(72) Inventeur: Ros, Benjamin, 31120 ROQUES (FR); Boustie, Christelle, 31650 LAUZERVILLE (FR); Scot, Gaël, 31000 TOULOUSE (FR)
(74) Mandataire: Blot, Philippe Robert Emile

(56) Documents cités:
- WO-A1-03/069936

## Description

La présente invention concerne un système de gestion multiple de ressources de transmission d'un système de radiocommunication multicellulaire à base d'au moins un satellite et un procédé de gestion de ressources de transmission mis en oeuvre par un tel système.

Des systèmes satellitaires de radiocommunication multicellulaire à base de satellites existent déjà comme par exemple le système THURAYA.

Une norme de l'ETSI, désignée par « GEO- Mobile Radio Interface Specifications ; Part 3 :Network Spécifications ; Sub-part 2 : Network architecture ; GMR -1 03.002 », définit également dans le cadre de l'UMTS (Universal Mobile Telecommunication System), l'architecture de la composante satellitaire d'un système multicellulaire pour des services à bande étroite.

Des normes de systèmes terrestres de nouvelle génération dites de pré-quatrième génération ou 3.9G telles que la Technologie de l'évolution à long terme du 3GPP, LTE (LongTerm Evolution 3GPP Technology), et WIMAX IEEE 802.16 (Worldwide Interopérability for Micowave Access), sont en cours d'élaboration et proposent des services à débits plus élevés encore. Le déploiement de tels systèmes de quatrième génération 3.9G a commencé à partir de 2010.

A l'instar des systèmes de troisième génération, il est intéressant de compléter les systèmes terrestres de quatrième génération, rentables lorsque les densités de terminaux utilisateurs sont élevées, par des systèmes satellitaires qui deviennent quant à eux rentables lorsque l'on cherche à élargir la couverture des systèmes terrestres dans des zones de densités de terminaux utilisateurs moindres que celles des cellules d'un système terrestre.

En raison des débits plus élevés exigés par les services proposés d'un système de quatrième génération, on cherche à diminuer la taille des cellules satellitaires de façon à augmenter la capacité du système satellitaire, c'est-à-dire le volume de trafic que peut gérer le système satellite.

Il est connu d'attribuer à chaque faisceau satellitaire ou de manière correspondante à chaque cellule satellitaire une bande de fréquences selon un schéma de réutilisation donné.

A l'instar du cas terrestre, dans le cas de services à bande étroite, il est également connu de coordonner un ensemble de stations émettrices et réceptrices, dénommées « station d'accès de transmission au sol » et désignées par l'acronyme GTS (en anglais Gateway Transceiver Station), par une station d'accès de coordination GSC (en anglais Gateway Station Controller).

Ces stations émettrices et réceptrices GTS assurent seulement une gestion servile de la couche physique, c'est-à-dire exécutent la mise en oeuvre de transmissions à partir d'une configuration fixe et/ou dynamique des ressources de transmission affectées pour chaque canal de transmission dont la station a la charge et des mesures de qualité par canal.

La configuration est déterminée par la station d'accès de coordination GSC qui a pour domaine de gestion les ressources de transmission des GTS qui lui sont rattachées exclusivement, ou en d'autres termes la gestion des terminaux rattachés aux cellules associées aux GTS.

Une telle architecture est transposable de prime abord à un système satellitaire de quatrième génération.

Toutefois, en raison de la taille des cellules plus faible pour un système satellitaire de quatrième génération, et d'une sensibilité plus forte au dépointage de l'antenne du satellite, le nombre de basculements par unité de temps de trafic large bande entre des couvertures adjacentes de cellules gérés par deux stations d'accès différentes augmente.

Une gestion souple et efficace en termes de capacité des ressources de transmission large bande qui garantit en même temps une continuité de service en terme d'absence d'interruption des communications apparait difficile à réaliser avec une telle architecture transposée directement.

On cherche à rendre plus souple et efficace la gestion des basculements de trafic et des changements des ressources de transmission dans le système satellitaire de manière à rendre compatible la diminution de la taille des cellules avec les vitesses de dépointage de l'antenne satellite.

A cet effet l'invention a pour objet un système de radiocommunication cellulaire à satellite comprenant :
un satellite de communication transparent, servant de relai, placé sur une orbite géostationnaire ou une orbite elliptique hautement inclinée,
au moins une station d'accès satellitaire, d'émission et de réception, configurées pour émettre et pour recevoir des messages de service et de signalisation vers et depuis le satellite sur une première voie radioélectrique bidirectionnelle,
un ensemble de terminaux utilisateurs configurés pour recevoir et pour émettre les messages de service et de signalisation depuis et vers le satellite sur une deuxième voie radioélectrique bidirectionnelle, la deuxième voie bidirectionnelle étant composée d'une deuxième voie descendante aller et d'une deuxième voie montante retour,
au moins une unité de contrôle d'une cellule virtuelle reliée à une ou plusieurs station d'accès satellitaire, une cellule virtuelle étant un ensemble de ressources fréquentielles et spatiales de transmission,
le satellite de communication étant configuré pour émettre suivant la deuxième voie descendante aller et à recevoir suivant la deuxième voie montante retour les messages de service et de signalisation reçus et émis par l'ensemble de terminaux, les messages de service et de signalisation étant répartis dans un ensemble de faisceaux satellitaires Fi de radiocommunication,
chaque faisceau satellitaire F(i) étant identifié par un premier indice entier d'identification de faisceau i,
chaque faisceau satellitaire F(i) définissant par sa portée radioélectrique au sol une couverture satellitaire d'une cellule satellitaire, et étant associé à une bande de fréquence prise parmi un nombre prédéterminé Nb de bandes de fréquences différentes B(k), chaque bande de fréquence B(k) étant identifiée par un deuxième indice entier d'identification de bande k, avec k variant de 1 à Nb,
chaque bande de fréquence B(k) étant subdivisée en une ou plusieurs sous-bandes de fréquence SB(k, j), chaque sous-bande étant identifiée par un couple d'indices (k, j) dans lequel k est l'indice de la bande et j est un entier compris entre 1 et un entier Nsb(j) dépendant k,
l'ensemble des faisceaux satellitaires étant configuré de sorte qu'une bande allouée B(g(i)) suivant une fonction de distribution g à un faisceau quelconque i est différente des bandes associées à la totalité des faisceaux adjacents au faisceau quelconque F(i), et
chaque station d'accès satellitaire étant associée à un bouquet compact différent d'au moins deux faisceaux satellitaires, aucun bouquet pris parmi deux bouquets quelconques n'ayant un faisceau commun
caractérisé en ce que
une ressource fréquentielle et spatiale de transmission est une sous-bande d'indice j d'une bande d'indice k attribuée à un faisceau d'indice i et est associée à un triplet (i, k, j), et
une cellule virtuelle est un ensemble de ressources fréquentielles et spatiales de transmission tel que l'ensemble des faisceaux auxquelles elles appartiennent forment un ensemble compact de faisceaux, et
chaque terminal est associé à une cellule virtuelle et est configuré pour recevoir de l'unité de contrôle de la cellule virtuelle associée et pour exécuter une commande de configuration d'un canal de transmission pour y émettre et recevoir des messages, le canal utilisant en même temps au moins deux ressources fréquentielles et spatiales dont les indices de bande sont différents.
chaque unité de contrôle d'une cellule virtuelle est configurée pour gérer les ressources fréquentielles et spatiales de la cellule virtuelle qui lui est associée, et pour faire transiter les messages reçus et émis par les terminaux affectés à la cellule virtuelle de l'unité de contrôle.

Suivant des modes particuliers de réalisation, le système de radiocommunication cellulaire comprend l'une ou plusieurs des caractéristiques suivantes :
- chaque sous-bande possède une large bande de largeur supérieure ou égale à 2,5 MHz, et chaque terminal associé à une cellule virtuelle est configuré pour mesurer en même temps la qualité de transmission de chaque sous-bande de la cellule virtuelle à laquelle il appartient ;
- le nombre de sous-bandes par bande de fréquences est constant et les sous-bandes d'une même bande ont une même largeur ;
- chaque unité de contrôle d'une cellule virtuelle comporte une horloge de référence différente et est configurée pour synchroniser les messages émis et reçus par chaque terminal de la cellule virtuelle associée sur l'horloge de référence de la cellule virtuelle associée ;
- chaque station d'accès satellitaire est configurée pour émettre et recevoir les messages, correspondants au bouquet associé, et est connectée à une ou plusieurs unités de contrôle qui gèrent les ressources fréquentielles et spatiales dont les indices de faisceaux correspondent aux faisceaux du bouquet associés à la station d'accès ;
- une station d'accès satellitaire est desservie par au moins deux unités de contrôle et dans lequel au moins une des unités de contrôle qui dessert la station d'accès dessert la totalité de ses ressources fréquentielles et spatiales sur la station d'accès satellitaire ;
- une unité de contrôle dessert au moins deux stations d'accès ;
- une station d'accès est desservie par une seule unité de contrôle et l'unité de contrôle dessert seulement cette station d'accès.

L'invention a également pour objet un procédé de changement de ressources de transmission au sein d'une même cellule virtuelle au cours d'une communication d'un terminal dans un système tel que défini ci-dessus, comprenant des étapes suivantes :
le terminal rattaché préalablement à une cellule virtuelle dispose d'une première liste des sous-bandes de fréquences utilisées dans la cellule virtuelle, et effectue une mesure de type large bande de la qualité de transmission de chaque sous-bande de la cellule virtuelle ;
le terminal envoie vers l'unité de contrôle de la cellule virtuelle au travers d'un premier canal utilisant une ou plusieurs sous-bandes de la cellule virtuelle, un premier message contenant des informations représentatives de la qualité de chaque sous-bande administré par l'unité de contrôle de la cellule virtuelle ;
l'unité de contrôle à partir des informations de qualité des sous-bandes de la cellule virtuelle actuelle et d'une deuxième liste des canaux libres de la cellule virtuelle, détermine les paramètres de transmission d'un deuxième canal comprenant une ou plusieurs sous-bandes qui correspond à des conditions de réception radioélectrique plus favorables que celles du premier canal, lorsqu'un tel deuxième canal existe ;
lorsqu'un deuxième canal existe, l'unité de contrôle réserve la ou les sous-bandes du deuxième canal, prépare et envoie un deuxième message à destination du terminal contenant des informations d'identification de la ou des nouvelles sous-bandes du deuxième canal de transmission et un ordre de basculement du premier canal vers le deuxième canal ;
après réception et décodage du deuxième message, le terminal exécute l'ordre de basculement du premier canal sur le deuxième canal et envoie au satellite tout nouveau message suivant dans la ou les sous-bandes utilisées par le deuxième canal.

L'invention a également pour objet un procédé de changement de ressources de transmission avec basculement d'une première cellule virtuelle sur une deuxième cellule virtuelle au cours d'une communication d'un terminal dans un système tel que défini ci-dessus, comprenant les étapes suivantes :
le terminal rattaché préalablement à la première cellule virtuelle dispose d'une première liste de sous-bandes de fréquence utilisées dans la première cellule virtuelle, et effectue une mesure de type large bande de la qualité de transmission de chaque sous-bande de la première cellule virtuelle ;
le terminal envoie vers la première unité de contrôle C1 au travers d'un premier canal de transmission actuellement utilisant une ou plusieurs sous-bandes de fréquence de la première cellule virtuelle un premier message contenant des informations représentatives de la qualité de chaque sous-bande administrée par la première unité de contrôle de la première cellule virtuelle actuellement en vigueur ;
ensuite, la première unité de contrôle C1, à partir des informations de qualité des sous-bandes de la première cellule virtuelle actuelle et d'un ensemble de deuxièmes listes de sous-bandes de cellules virtuelles adjacentes en termes de faisceaux, détermine s'il existe une deuxième cellule virtuelle adjacente en termes da faisceaux apte à assurer pendant une longue durée des conditions de réception radioélectrique plus favorables que celles d'un canal quelconque de la première cellule virtuelle ;
lorsqu'une telle deuxième cellule virtuelle existe, une nouvelle connexion à débit élevé du côté du réseau à haut débit est préparée par la station de commutation de mobilité MSC et la deuxième unité de contrôle C2 associée à la deuxième cellule virtuelle, et la première unité de contrôle C1 envoie au terminal un deuxième message comprenant un ordre de préparation d'un basculement sur un deuxième canal de transmission, une information d'identification de la deuxième cellule virtuelle sur laquelle basculer et une troisième liste des sous-bandes à balayer de la deuxième cellule virtuelle pour effectuer une mesure de type large bande de l'ensemble des canaux offerts par la deuxième cellule virtuelle,
après avoir reçu le deuxième message le terminal envoie à la deuxième unité de contrôle au travers d'un deuxième canal de transmission un troisième message contenant des informations représentatives de la qualité de chaque sous-bande administrée par la deuxième unité de contrôle de la deuxième cellule virtuelle C2 ;
la deuxième unité de contrôle C2 à partir des informations de qualité des sous-bandes de la deuxième cellule virtuelle mesurées, déterminées et fournies par le terminal et une quatrième liste de canaux de transmission libres de la deuxième cellule virtuelle, et détermine un troisième canal formé d'une ou plusieurs sous-bandes compris dans la quatrième liste des canaux libres de la deuxième cellule virtuelle qui correspond à des conditions de réception radioélectrique plus favorables que celles du premier canal ;
la deuxième unité de contrôle C2 réserve la ou les sous-bandes du troisième canal, prépare et envoie sur le deuxième canal de signalisation un quatrième message à destination du terminal contenant des informations d'identification du troisième canal et de la ou des sous-bandes allouées au troisième canal ;
le terminal reçoit et décode le quatrième message, et enregistre les informations de la ou des nouvelles sous-bandes attribuées par la deuxième unité de contrôle C2, puis envoie à première unité de contrôle C1 un cinquième message d'annonce selon lequel il est prêt à basculer sur le troisième canal de la deuxième cellule virtuelle ;
après avoir reçu le cinquième message, la première unité de contrôle C1 envoie un ordre à la station de commutation mobile MSC d'activer la deuxième connexion entre la deuxième unité de contrôle C2 et le réseau haut débit, prépare et envoie au terminal un sixième message destiné contenant un ordre de basculer sur la deuxième unité de contrôle C2 de la deuxième cellule virtuelle et d'utiliser le troisième canal de transmission ;
après réception et décodage du sixième message, le terminal exécute l'ordre de basculement du premier canal sur le troisième canal et envoie à tout nouveau message suivant à la deuxième unité de contrôle.

L'invention sera mieux comprise à la lecture de la description d'une forme de réalisation qui va suivre, donnée uniquement à titre d'exemple et faite en se référant aux dessins sur lesquels :
- la Figure 1 est l'architecture d'une première forme de réalisation d'un système de radiocommunication multicellulaire à satellite selon l'invention ;
- la Figure 2 est une vue de la couverture cellulaire au sol du système de radiocommunication de la Figure 1 ;
- la Figure 3 est une vue détaillée de l'infrastructure au sol d'accès au satellite du système de radiocommunication de la Figure 1 ;
- la Figure 4 est une vue d'un exemple de répartition des bandes et des sous-bandes de fréquences d'un bouquet de faisceaux satellitaires de la Figure 2 géré par une unité de contrôle d'une cellule virtuelle ;
- la Figure 5 est une vue encore plus détaillée de l'architecture d'une station d'accès satellitaire de la Figure 3 associée à un bouquet avec ses interfaces aux unités de contrôle et conforme à la répartition des sous-bandes de la Figure 4 ;
- la Figure 6 est une vue détaillée d'une deuxième configuration de l'infrastructure au sol d'accès au satellite correspondant à une deuxième forme de réalisation du système de radiocommunication cellulaire de la Figure 1 ;
- la Figure 7 est une vue d'une première variante d'une couverture satellitaire des Figures 1 et 3 avec des bouquets à cinq faisceaux de forme carré et réutilisant cinq bandes de fréquences ;
- la Figure 8 est une vue d'une deuxième variante d'une couverture satellitaire des Figures 1 et 3 avec des bouquets à quatre faisceaux de forme triangulaire et réutilisant quatre bandes de fréquences ;
- la Figure 9 est un ordinogramme de gestion des ressources de transmission d'une cellule virtuelle du système de radiocommunication multicellulaire de la Figure 1 ;
- la Figure 10 est une vue d'une première position relative d'un terminal par rapport aux cellules satellitaires d'un même bouquet de faisceaux dans lequel il se trouve ;
- la Figure 11 est une vue de l'état de réception par le terminal de la Figure 10 des puissances reçues dans les diverses sous-bandes de sa cellule virtuelle lorsque le terminal se trouve dans la première position ;
- la Figure 12 est une vue du canal de transmission sélectionné par le terminal lorsqu'il se trouve dans la première position ;
- la Figure 13 est une vue d'une deuxième position relative du terminal par rapport aux cellules satellitaires du bouquet de la Figure 10 ;
- la Figure 14 est une vue de l'état de réception par le terminal des puissances reçues dans les diverses sous-bandes de fréquences de la cellule virtuelle lorsque le terminal se trouve dans la deuxième position de la Figure 13 ;
- la Figure 15 est une vue du canal de transmission sélectionné par terminal lorsqu'il se trouve dans la deuxième position ;
- la Figure 16 est une vue d'une troisième position relative du terminal par rapport aux cellules satellitaires du bouquet de la Figure 10 ;
- la Figure 17 est une vue de l'état de réception par le terminal des puissances reçues dans les diverses bandes de fréquences lorsque le terminal se trouve dans la troisième position de la Figure 16 ;
- la Figure 18 est une vue du canal de transmission sélectionné par terminal lorsqu'il se trouve dans la troisième position ;
- la Figure 19 est un ordinogramme d'un procédé de changement de ressources de transmission à l'intérieur d'une même cellule virtuelle ;
- la Figure 20 est un ordinogramme d'un procédé de changement de ressources de transmission avec changement de cellule virtuelle.

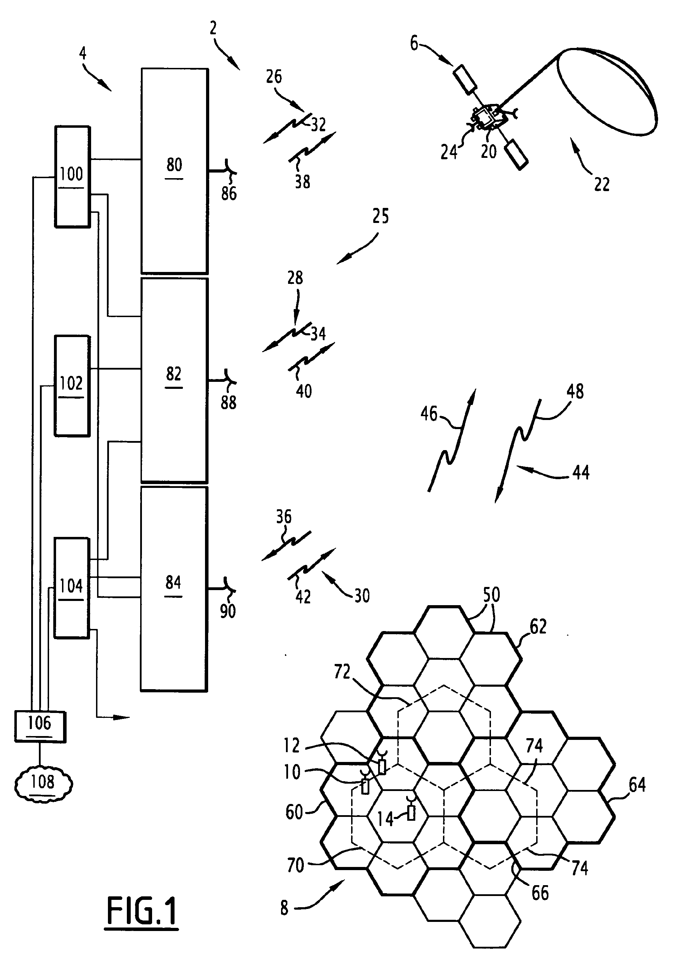

Suivant la Figure 1, un système de radiocommunication multicellulaire à satellite 2 comprend une infrastructure terrestre de télécommunication 4, un satellite de communication 6 transparent, servant de relai, placé sur une orbite géostationnaire GEO (en anglais GEostationary Orbit) ou une orbite elliptique hautement inclinée HEO (Highly inclined Elliptical Orbit), et un ensemble 8 de terminaux utilisateurs ou d'usagers de service de communication dont trois 10, 12 et 14 sont seulement représentés.

Le satellite de télécommunication 6 comprend une plateforme 20, une première antenne multifaisceaux d'émission et de réception 22 de messages de service et de signalisation au travers de signaux radioélectriques vers et depuis les terminaux 10, 11, 12 avec un réseau à formation de faisceaux, une deuxième antenne d'émission et de réception 24 des messages de service et de signalisation au travers de signaux radioélectriques vers et depuis l'infrastructure terrestre 4, et un répéteur transparent non représenté reliant les première et deuxième antennes 22, 24.

Le satellite de communication 6 est configuré pour émettre et recevoir les messages de service et de signalisation au travers de signaux radioélectriques vers et depuis l'infrastructure terrestre 4 suivant une première voie radioélectrique bidirectionnelle 25 comportant une ou plusieurs premières liaisons bidirectionnelles satellitaires, trois premières liaisons d'accès bidirectionnelles 26, 28 30 étant seulement représentées sur la Figure 1.

Les premières liaisons bidirectionnelles 26, 38, 30 comprennent respectivement des premières liaisons d'accès retour 32, 34, 36 descendantes et des premières liaisons d'accès montante aller 38, 40, 42.

Le satellite de communication 6 est configuré pour émettre et recevoir des messages de service et de signalisation au travers de signaux radioélectriques vers et depuis les terminaux 10, 12, 14 suivant une deuxième voie bidirectionnelle 44 formée par une deuxième liaison descendante aller 46 depuis la première antenne 22 du satellite 6 vers les terminaux 10, 12, 14 et une deuxième liaison montante retour 48 depuis les terminaux 10, 12, 14 vers la première antenne 22 du satellite 6.

La première antenne 22 du satellite 6 est configurée pour qu'au travers des signaux radioélectriques les messages de service et de signalisation reçus et émis par l'ensemble de terminaux 10, 12, 14 soient répartis dans un ensemble de faisceaux satellitaires de radiocommunication.

Suivant la Figure 1, à titre d'exemple vingt cinq faisceaux 50 sont représentés dont la couverture de chacun forme au sol une cellule satellitaire qui possède schématiquement une forme hexagonale.

Les faisceaux 50 sont regroupés par des bouquets de faisceaux, trois bouquets 60, 62 et 64 étant ici seulement représentés entièrement, et un quatrième bouquet 66 étant représenté partiellement par trois faisceaux.

Chaque bouquet 60, 62, 64, 66 a la même structure, ici hexagonale et comprend un faisceau central entouré d'une couronne périphérique de six faisceaux.

Chaque bouquet 60, 62, 64, 66 correspond comme détaillé par la suite à un motif périodique de réutilisation d'une bande totale de fréquences allouée suivant un facteur de réutilisation de fréquences dépendant notamment de la division de la bande totale de fréquences allouée en un certain nombre de bandes de fréquences.

Ici, le nombre de bandes de fréquences est pris égal à 7.

Une première cellule virtuelle 70, illustrée en traits interrompus sur la Figure 1, est un premier ensemble de ressources de transmission fréquentielles et spatiales en termes de fréquences et de faisceaux, une ressource de transmission étant définie dans un sens large comme une portion d'une bande de fréquence utilisée dans un faisceau.

Un premier ensemble de terminaux, situés dans ensemble compact des faisceaux du bouquet 60 et utilisant une partie ou la totalité des bandes de fréquences, est associé à la première cellule virtuelle.

Une deuxième cellule virtuelle 72, illustrée en traits interrompus sur la Figure 1, est un deuxième ensemble de ressources de transmission fréquentielles et spatiales.

Un deuxième ensemble de terminaux situés dans deux faisceaux du premier bouquet 60, dans quatre faisceaux du deuxième bouquet 62, et dans un faisceau du troisième bouquet 64, utilisant partiellement les bandes de fréquence de deux faisceaux du premier bouquet 60, de trois faisceaux du deuxième bouquet 62 et des deux faisceaux du troisième bouquet 64, et utilisant totalement la bande de fréquence d'un faisceau du deuxième bouquet, est associé à la deuxième cellule virtuelle 72.

Une troisième cellule virtuelle 74, illustrée en traits interrompus sur la Figure 1, est un troisième ensemble de ressources de transmission fréquentielles et spatiales.

Un troisième ensemble de terminaux, situés dans deux faisceaux du premier bouquet 60, dans quatre faisceaux du troisième bouquet 64 et dans un faisceau d'un quatrième bouquet 66 représenté partiellement, et utilisant partiellement les bandes de fréquence de deux faisceaux du deuxième bouquet 62, de trois faisceaux du troisième bouquet 64 et du faisceau du quatrième bouquet 66, totalement la bande de fréquence d'un faisceau du troisième bouquet 64, est associé à la troisième cellule virtuelle 74.

Les terminaux 10, 11, 12 son configurés pour recevoir et pour émettre les messages de service et de signalisation au travers des signaux radioélectriques depuis et vers le satellite 6 sur la deuxième voie bidirectionnelle 44.

Chaque terminal 10, 12, 14 est configuré pour être associé à une cellule virtuelle.

Chaque terminal 10, 12, 14 est configuré pour recevoir de l'unité de contrôle de la cellule virtuelle associée et pour mettre en oeuvre une commande de configuration d'un canal de transmission pour émettre et recevoir dans le canal de transmission les messages qui lui sont destinés, le canal de transmission utilisant au moins une ressource fréquentielle et spatiale.

Chaque terminal 10, 12, 14 est configuré pour utiliser au moins deux ressources fréquentielles et spatiales dont les bandes de fréquences sont différentes lorsque les conditions d'une réception radioélectrique de qualité l'exigent.

L'infrastructure terrestre 4 comprend au moins deux stations d'accès satellitaire, d'émission et de réception, trois stations d'accès 80, 82, 84 étant représentées sur la Figure 1 raccordées respectivement à des antennes 86, 88, 90.

L'infrastructure terrestre 4 comprend également au moins une unité de contrôle 100, 102, 104 des ressources de transmission des cellules virtuelles 70, 72, 74 raccordées sélectivement aux stations d'accès satellitaire 80, 82, 84, un réseau public à haut débit 108, par exemple le réseau internet, et un centre de commutation mobile d'accès pour connecter les unités de contrôle 100, 102, 104 au réseau haut débit 108.

Les stations d'accès satellitaire, d'émission et de réception 80, 82, 84 sont configurées pour émettre et à recevoir les messages de service et de signalisation au travers des signaux radioélectriques vers et depuis le satellite 6 sur les premières liaisons bidirectionnelles 26, 28, 30.

Par convention, les stations d'accès satellitaire 80, 82, 84 sont dénommées respectivement deuxième, première, et troisième stations d'accès satellitaire.

Chaque station d'accès satellitaire d'émission et de réception 80, 82, 84 est associée à un bouquet compact différent d'au moins deux faisceaux satellitaires, aucun bouquet pris parmi deux bouquets quelconques n'ayant un faisceau commun. Ici, les bouquets 60, 62, 64 sont associés respectivement aux stations d'accès satellitaire 82, 80, 84.

Chaque station d'accès satellitaire 80, 82, 84 est configurée pour former les faisceaux correspondant à leur bouquet associé au travers d'un schéma de transmission propre à la première voie bidirectionnelle 25, et pour émettre les messages des terminaux dans les faisceaux qui leur ont été attribués par les unités de contrôle de cellule virtuelle, suivant une configuration de paramètres de transmission propre à chaque terminal et déterminé par l'unité de contrôle en charge du terminal.

Chaque unité de contrôle 100, 102, 104 d'une cellule virtuelle est configurée pour gérer exclusivement les communications d'une cellule virtuelle.

Par convention les unités de contrôle 100, 102, 104 sont dénommées respectivement deuxième, première, troisième unités de contrôle.

La première cellule virtuelle 70 est gérée exclusivement par la première unité de coordination 102.

La deuxième cellule virtuelle 72 est gérée exclusivement par la deuxième unité de coordination 100.

La troisième cellule virtuelle 74 est gérée exclusivement par la troisième unité de coordination 104.

Chaque unité de contrôle de cellule virtuelle est configurée pour affecter des ressources de transmission à l'ensemble de terminaux de sa cellule virtuelle associée au travers de commandes envoyées aux terminaux, et pour faire transiter les messages des terminaux de la cellule virtuelle depuis et vers l'infrastructure terrestre 4 au travers du satellite et d'une ou plusieurs stations d'accès satellitaire.

Chaque unité de contrôle est configurée pour envoyer à un terminal qu'il gère une commande de configuration d'un canal de transmission pour émettre et recevoir dans le canal de transmission, le canal de transmission pouvant utiliser une seule ressource fréquentielle et spatiale, plusieurs ressources fréquentielles et spatiales, et dans certains cas au moins deux ressources fréquentielles et spatiales dont les bandes de fréquences sont différentes.

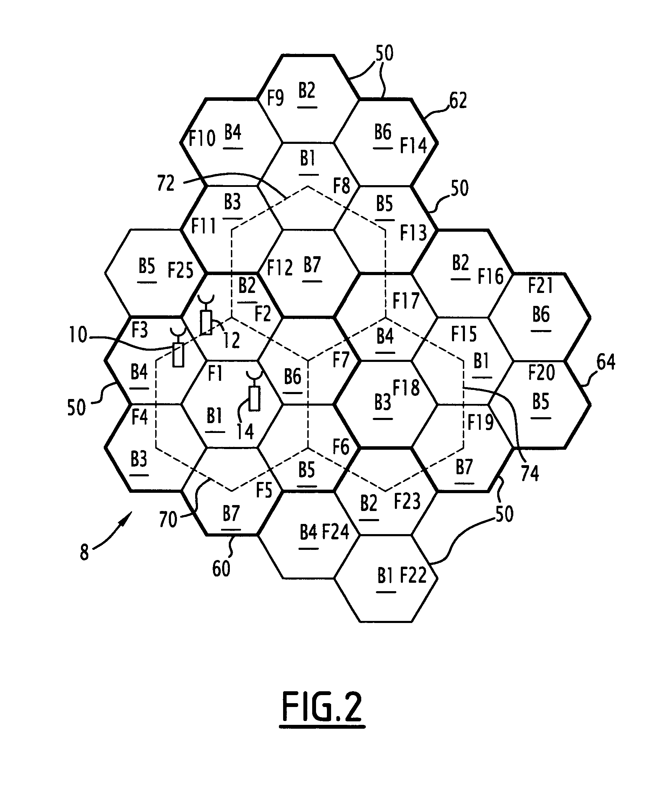

Suivant la Figure 2, les faisceaux de la Figure 1 sont dénommés de F1 à F25, et de manière générale chaque faisceau satellitaire Fi est identifié de manière unique par un premier indice entier d'identification de faisceau i .

Chaque faisceau satellitaire Fi définit par sa portée radioélectrique au sol une couverture satellitaire formant une cellule satellitaire.

A chaque faisceau satellitaire Fi et de manière correspondante à chaque cellule une bande de fréquence Bk est associée, prise parmi un nombre prédéterminé Nb de bandes de fréquences différentes.

Chaque bande de fréquence Bk est identifiée par un deuxième indice entier k d'identification de bande, avec k variant de 1 à Nb.

Ici on suppose que la bande totale, notée Btotal, comprend sept bandes de largeur égale, juxtaposées et appelées B1, B2, B3, B4, B5, B6 et B7.

L'ensemble des faisceaux satellitaires Fi est configuré de sorte qu'une bande allouée Bg(i) à un faisceau quelconque Fi suivant une fonction de distribution g est différente des bandes associées à la totalité des faisceaux adjacents au faisceau quelconque Fi.

Ici sur la Figure 2, les bandes de fréquences B1, B2, B3, B4, B5, B6, B7 sont allouées respectivement dans le même ordre aux faisceaux F1, F2, F4, F3, F6, F7, F5 qui forment le premier bouquet 60. Dans ce cas, g(1), g(2), g(3), g(4), g(5) g(6), g(7) sont égaux respectivement à 1, 2, 4, 3, 7, 5, 6.

Les bandes de fréquences B1, B2, B3, B4, B5, B6, B7 sont également allouées respectivement dans le même ordre aux faisceaux F8, F9, F11, F10, F13, F14, F12 qui forment le deuxième bouquet 62.

Les bandes de fréquences B1, B2, B3, B4, B5, B6, B7 sont également allouées respectivement dans le même ordre aux faisceaux F15, F16, F18, F17, F20, F21, F19 qui forment le troisième bouquet 64.

Les bandes de fréquences B1, B2, B4 sont également allouées respectivement dans le même ordre aux faisceaux F22, F23, F24 qui forment partiellement le quatrième bouquet 66.

Chaque bouquet 60, 62, 64, 66 correspond à un même motif de réutilisation des bandes de fréquences et la fonction de répartition spatiale g des bandes de fréquence Bk dans les faisceaux Fi est une fonction de réutilisation des bandes de fréquences.

Chaque bouquet comprend au moins deux faisceaux satellitaires, aucun bouquet pris parmi deux bouquets quelconques n'ayant un faisceau commun.

Il est à remarquer que lorsque la taille des faisceaux diminue à couverture constante et à puissance disponible bord constante, et sous réserve que les effets de dépointage et les interférences entre spots restent du même ordre de grandeur que le bruit thermique, la capacité du système satellite en termes de débit cumulé sur la couverture est augmentée.

Les terminaux 10, 12, 14 sont situés respectivement dans les faisceaux F3, F2 et F7 du premier bouquet 60.

La première cellule virtuelle 70 en tant qu'un ensemble de portions de bandes de fréquences distribuées dans un ensemble de faisceaux est gérée par la première unité de contrôle 102 associée pour exploiter une partie des bandes B2, B3, B4, B5, B6, B7 associées au faisceaux F2,F4, F3, F6, F7, F5 du premier bouquet 60, et pour exploiter en totalité la bande B1 du faisceau F1 du premier bouquet 60.

La deuxième cellule virtuelle 72 en tant qu'un ensemble de portions de bandes de fréquences distribuées dans un ensemble de faisceaux est configurée au travers de la deuxième unité de coordination 100 associée pour exploiter une partie des bandes B1, B3, B5 associées aux faisceaux F8, F11, F13 du deuxième bouquet 62, pour exploiter une partie des bandes B2, B6 associées aux faisceaux F2, F7 du premier bouquet 60, pour exploiter une partie de la bande B4 associée au faisceau F17 du troisième bouquet 64, et pour exploiter en totalité la bande B7 du faisceau F12 du deuxième bouquet 62.

La troisième cellule virtuelle 74 en tant qu'un ensemble de portions de bandes de fréquences distribuées dans un ensemble de faisceaux est configurée au travers de l'unité de coordination 104 associée pour exploiter une partie des bandes B3, B4, B7 associées aux faisceaux F18, F17, F19 du troisième bouquet 64, pour exploiter une partie des bandes B5, B6 associées aux faisceaux F6, ,F7 du premier bouquet 60, pour exploiter une partie de la bande B2 associée au faisceau F23 du quatrième bouquet 66, et pou exploiter en totalité la bande B3 du faisceau F18 du troisième bouquet 64.

Les trois portions de la bande B6 du faisceau F7, utilisées par les première, deuxième, troisième cellules virtuelles 70, 72, 74, sont dépourvues de recouvrement et forment ensemble la bande B6.

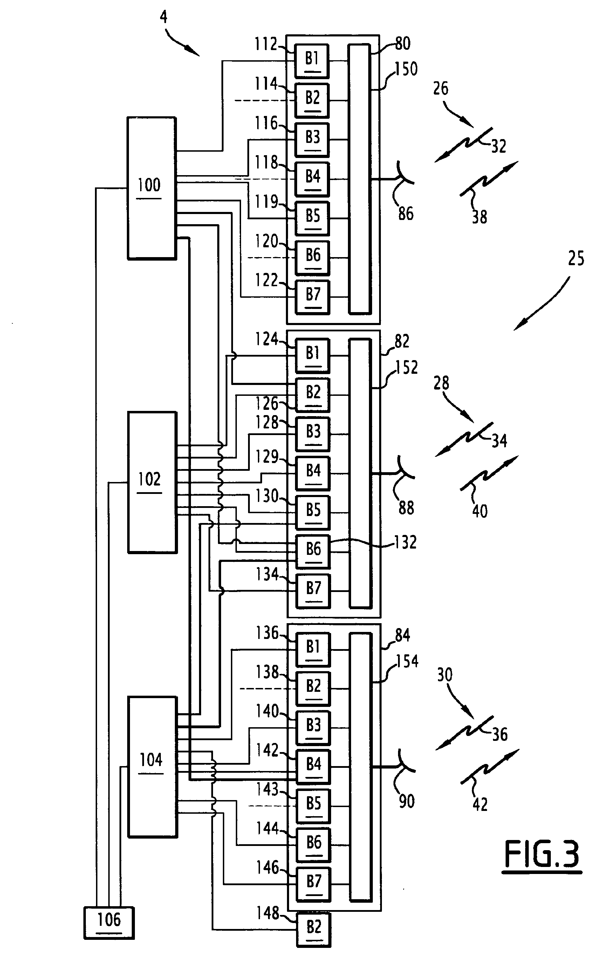

Suivant la Figure 3, une architecture de haut niveau des stations d'accès satellitaires est illustrée et toutes les connexions reliant les unités de contrôle 100, 102, 104 aux stations d'accès satellitaire 80, 82, 84 et au centre de commutation mobile 106 sont représentées.

Chaque station d'accès 80 ; 82 ; 84 comprend respectivement sept unités de transposition en fréquence 112, 114, 116, 118, 119, 120, 122 ; 124, 126, 128, 129, 130, 132, 134 ; 136, 138, 140, 142, 143, 144, 146 dans et depuis une bande de fréquence différente coté de leur antenne d'accès satellite respective 86, 88, 90 et une unité de multiplexage et démultiplexage 150, 152, 154 avec pour chacune une transposition à et depuis une porteuse d'accès différente.

Dans la deuxième station d'accès satellitaire 80, les unités de transposition 112, 114, 118, 119, 120, 122 sont associées aux bandes de fréquences B1, B2, B3, B4, B5, B6, B7 et à une porteuse d'accès correspondant au bouquet 62.

Dans la première station d'accès satellitaire 82, les unités de transposition 124, 126, 128, 129, 130, 132, 134 sont associés aux bandes de fréquences B1, B2, B3, B4, B5, B6, B7 et à une porteuse d'accès correspondant au bouquet 60.

Dans la troisième station d'accès satellitaire 84, les unités de transposition 136, 138, 140, 142, 143, 144, 146 sont associées aux bandes de fréquences B1, B2, B3, B4, B5, B6, B7 et à une porteuse d'accès correspondant au bouquet 64.

Il est supposé ici qu'une correspondance biunivoque existe entre le plan de fréquences de la première voie bidirectionnelle 25 et la distribution fréquentielle et spatiale des faisceaux satellitaires de la deuxième voie bidirectionnelle 44.

La première unité de contrôle 102 qui gère la première cellule virtuelle 70 est connectée à chaque unité de transposition 124, 126, 128, 129, 130, 132, 134 de la première station d'accès 82.

La première unité de contrôle 102 gère en totalité la bande B1 et donc toutes les canaux de transmission utilisant la bande B1 dans le premier bouquet 60.

La première unité de contrôle 102 gère en partie chacune des bandes B2, B3, B4, B5, B6, B7 du premier bouquet 60 et donc une partie des canaux de transmission utilisant chacune des bandes B2, B3, B4, B5, B6, B7.

La deuxième unité de contrôle 100 qui gère la deuxième cellule virtuelle 72 est connectée aux unités de transposition 126, 132 de la première station d'accès, aux unités de transposition 112, 116, 119, 122 de la deuxième station d'accès 80, et à l'unité de transposition 142 de la troisième station d'accès 84.

La deuxième unité de contrôle 100 gère en totalité la bande B7 et donc tous les canaux de transmission utilisant la bande B7 dans le deuxième bouquet 62 et donc tous les canaux de transmission utilisant la bande B7 dans le deuxième bouquet 62.

La deuxième unité de contrôle 100 gère une partie de chacune des bandes B2, B6 du premier bouquet 60, de chacune des bandes B1, B3, B5 du deuxième bouquet 62, et de la bande B4 du troisième bouquet 64, et donc une partie des canaux de transmission utilisant les bandes précitées.

La troisième unité de contrôle 104 qui gère la troisième cellule virtuelle 74 est connectée aux unités de transposition 130, 132 de la première station d'accès 82, aux unités de transposition 136, 140, 142, 146 de la troisième station d'accès 84, et à une unité de transposition 148 d'une quatrième station d'accès non représentée sur la Figure 3.

La troisième unité de contrôle 104 gère en totalité la bande B3 et donc tous les canaux de transmission utilisant la bande B3 dans le troisième bouquet 64 et donc tous les canaux de transmission utilisant la bande B3 dans le deuxième bouquet 64.

La troisième unité de contrôle 104 gère une partie de chacune des bandes B5, B6 du premier bouquet 60, de chacune des bandes B1, B4, B7 du troisième bouquet 64, et de la bande B2 du quatrième bouquet 66, et donc une partie des liaisons de communication utilisant les bandes précitées.

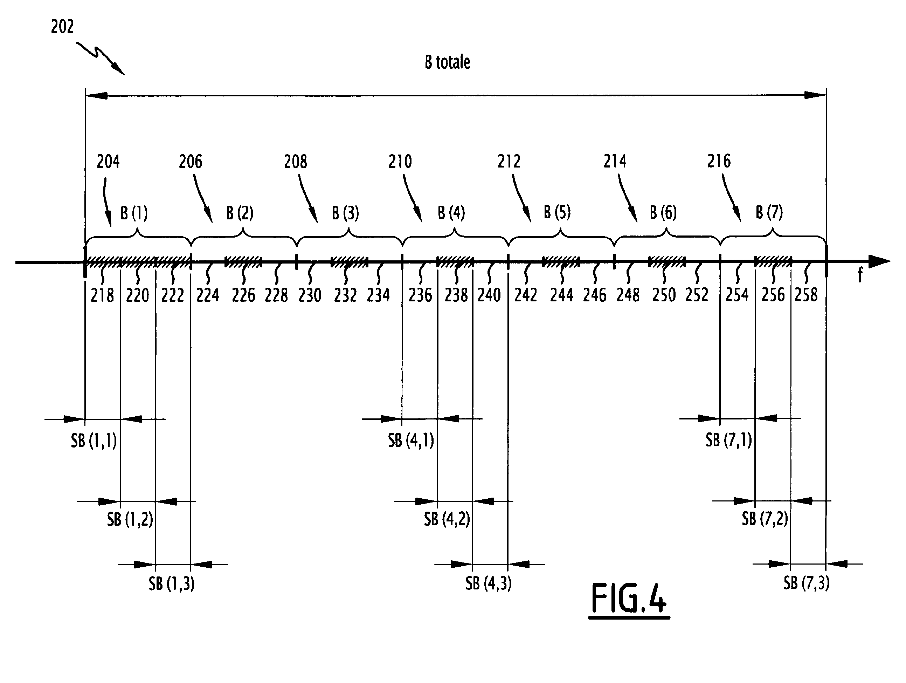

Suivant la Figure 4, un exemple de répartition des fréquences de la première cellule virtuelle 70 utilisées au sein de la bande totale est représenté.

Une bande totale 202 allouée au premier bouquet 60 est divisée en sept bandes 204, 206, 208, 210, 212, 214, 216 formant une séquence de bandes adjacentes et de largeur égale.

La première bande 204 est associée à la bande B1 ou encore B(1) de manière à mettre en évidence un indice de bande k, ici égal à 1.

De manière similaire, la deuxième bande 206 adjacente à la première bande 204 est désignée par B(2).

Les bandes 208, 210, 212, 214, 216 sont désignées respectivement par B(3), B(4), B(5), B(6), B(7).

Chaque bande 204, 206, 208, 210, 212, 214, 216 est subdivisée respectivement en trois sous-bandes 218, 220, 222, 224, 226, 228, 230, 232, 234, 236, 238, 240, 242, 244, 246, 248, 250, 252, 254, 256 et 258.

Chaque sous-bande est désignée de manière univoque par SB(k,j) dans lequel k désigne l'indice de bande Bk à laquelle la sous-bande SB(k,j) appartient et j désigne un rang de sous-bande par rapport à la bande Bk.

Par exemple les sous-bandes 218, 220, 222 de la bande B(1) sont désignées respectivement par SB(1,1), SB(1,2) et SB(1,3).

De manière similaire, les sous-bandes 236, 238, 240 de la bande B(4) sont désignées respectivement par SB(4,1), SB(4,2) et SB(4,3) et les sous-bandes 254, 256, 258 de la bande B(7) sont désignées respectivement par SB(7,1), SB(7,2) et SB(7,3).

Les sous-bandes exploitées par la première cellule virtuelle 70 et donc par la première unité de contrôle 102 sont les sous-bandes SB(1,1), SB(1,2), SB(1,3), SB(2,2), SB(3,2), SB(4,2), SB(5,2), SB(6, 2) et SB(7,2) de la bande totale du premier bouquet.

Les sous-bandes de la première cellule virtuelle 70 sont représentées chacune sur la Figure 4 par un segment de trait hachuré.

Il est à remarquer que la représentation de la distribution des fréquences utilisées par la première cellule virtuelle 70 est ici la plus simple, en raison du fait que la bande 202 allouée est une bande de fréquences allouée à un même bouquet. Ici, la représentation fournie en tant que projection des ressources fréquentielles et spatiales de la première cellule virtuelle 70 sur un espace des bandes de fréquences est identique à la répartition des bandes de fréquences émises et reçues par une même station d'accès.

De manière générale, pour définir complètement et de manière unique les ressources de transmission fréquentielles et spatiales, il convient d'ajouter à la représentation fréquentielle l'indice du faisceau i auquel est associée la bande de fréquences Bk suivant la fonction de répartition g.

Ici sur la Figure 4, les indices i des faisceaux Fi associés respectivement aux bandes de fréquences B(1), B(2), B(3), B(4), B(5), B(6), B7 sont 1, 2, 3, 4, 5, 6, 7.

Dans le cas de la deuxième cellule virtuelle 72 et de la troisième cellule virtuelle 74 il conviendra de représenter la répartition des fréquences dans un feuilletage de fréquences à plusieurs feuillets de bande totale de fréquences, un feuillet étant l'ensemble des fréquences contenues dans la bande totale d'un même bouquet.

Dans le cas de la deuxième cellule virtuelle 72, les feuillets sont les bandes totales des premier, deuxième et troisième bouquets 60, 62, 64.

Dans le cas troisième cellule virtuelle, les feuillets sont les bandes totales des premier, troisième et quatrième bouquets 60, 62, 64, 66.

Par exemple, avec des notations similaires à celle de la Figure 4, les sous-bandes exploitées par la deuxième cellule virtuelle 72 et donc par la deuxième unité de coordination 100 sont les sous-bandes SB(2,1), SB(6,1) de la bande totale du premier bouquet 60, les sous-bandes SB(7,1), SB(7,2), SB(7,3), SB(3,1) SB(1,1), SB(5,1) du deuxième bouquet 62 et la sous-bande SB(4,1) du troisième bouquet 64.

Ainsi les ressources de transmission de la deuxième cellule virtuelle 72 peuvent être représentées par l'ensemble des triplets (8 ,1 ,1), (9, 2, 1), (11, 3, 1), (17, 4,1), (13, 5, 1), (14, 6, 1), (12, 7, 1), (12, 7, 2), (12, 7, 3) dans laquelle les premier, deuxième, troisième indices désignent respectivement l'indice de faisceau i, l'indice de bande k, l'indice de sous-bande j.

Par exemple, avec des notations similaires à celles de la Figure 4, les sous-bandes exploitées par la troisième cellule virtuelle 74 et donc par la troisième unité de contrôle 104 sont les sous-bandes SB(5,3), SB(6,3) du premier bouquet 60 et les sous-bandes SB(4,2), SB(3,1), SB(3,2), SB(3,3), SB(1,1)SB(7,1) de la bande totale du troisième bouquet 64, et la sous-bande SB(2,1) du quatrième bouquet 66.

Ainsi les ressources de transmission de la troisième cellule virtuelle 74 peuvent être représentées par l'ensemble des triplets (15, 1 ,1), (23, 2, 1), (18, 3, 1), (18, 3, 2), (18, 3, 3), (17, 4, 2), (6, 5, 3), (7, 6, 3), (19, 7, 1) dans laquelle les premier, deuxième, troisième indices désignent respectivement l'indice de faisceau, l'indice de bande, l'indice de sous-bande.

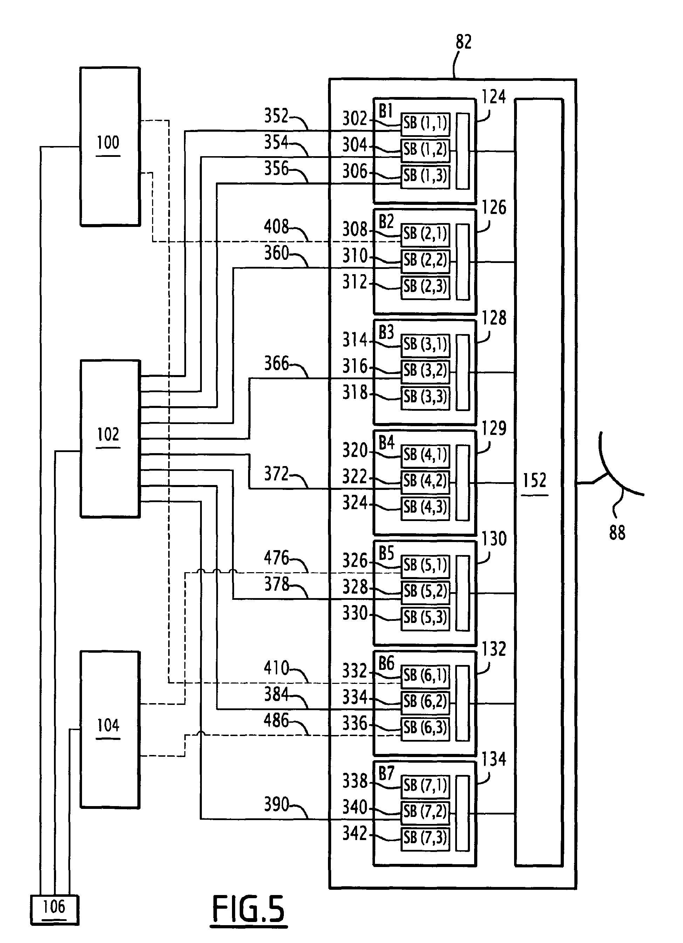

Suivant la Figure 5 une vue détaillée de l'architecture de la première station d'accès satellitaire 82 et de ses interconnexions avec les unités de contrôle 100, 102, 104, compatible de la configuration de la cellule virtuelle décrite à la Figure 4, reprend de manière identique les éléments de la Figure 3.

Chaque unité de transposition dans et depuis une bande B(k), i variant de 1 à 7, c'est-à-dire les unités 124, 126, 128, 129, 130, 132, 134 comprennent chacune respectivement trois unités de transposition dans une sous-bande SB(k, j), j variant de 1 à 3.

L'unité de transposition 124 comprend des unités de transposition dans une sous-bande 302, 304, 306, associées respectivement aux sous-bandes SB(1, 1), SB(1, 2), SB(1,3).

L'unité de transposition 126 comprend des unités de transposition dans une sous-bande 308, 310, 312 associées respectivement aux sous-bandes SB(2, 1), SB(2, 2), SB(2, 3).

L'unité de transposition 128 comprend des unités de transposition dans une sous-bande 314, 316, 318 associées respectivement aux sous-bandes SB(3, 1), SB(3, 2), SB(3, 3).

L'unité de transposition 129 comprend des unités de transposition dans une unité de sous-bande 320, 322, 324, associées respectivement aux sous-bandes SB(4, 1), SB(4, 2), SB(4, 3).

L'unité de transposition 130 comprend des unités de transposition dans une unité de sous-bande 326, 328, 330, associées respectivement aux sous-bandes SB(5, 1), SB(5, 2), SB(5, 3).

L'unité de transposition 132 comprend des unités de transposition dans une sous-bande 332, 334, 336, associées respectivement aux sous-bandes SB(6, 1), SB(6, 2), SB(6, 3).

L'unité de transposition 134 comprend des unités de transposition dans une sous-bande 338, 340, 342, associées respectivement aux sous-bandes SB(7, 1), SB(7, 2), SB(7, 3).

Les unités de transposition dans une sous-bande 302, 302, 306, 310, 316, 322, 328, 334, 340 sont connectées à la première unité de contrôle 102 au travers de liaisons respectives de connexion 352, 354, 356, 360, 366, 372, 378, 384, 390, représentées en trait ininterrompus et servent à relayer les canaux de transmission utilisant les ressources de transmission de la première cellule virtuelle 70 conformément au plan de fréquences de la Figure 4.

Les unités de transposition dans une sous-bande 308, 334 sont connectées la deuxième unité de contrôle 100, au travers de liaisons respectives de connexion 408, 410 représentées en traits pointillés, et servent à relayer en partie les ressources de transmission de la deuxième cellule virtuelle 72.

Les unités de transposition dans une sous-bande 326, 336 sont connectées à la troisième unité de contrôle104, au travers de liaisons respectives de connexion 476, 486 représentées en traits pointillés, et servent à relayer en partie les ressources de transmission de la troisième cellule virtuelle 74.

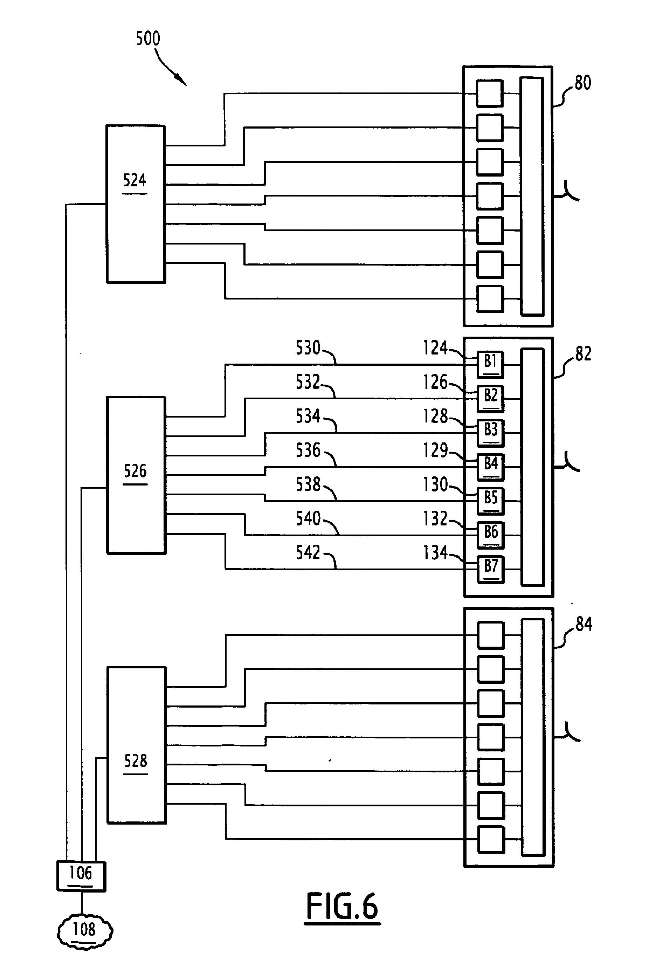

Suivant la Figure 6, un deuxième mode de réalisation du système de radiocommunication multicellulaire est représenté dans lequel chaque cellule virtuelle exploite la totalité des bandes de fréquences d'un bouquet de faisceaux différent.

Les trois stations d'accès satellitaires 80, 82, 84 illustrées sont identiques à celles des Figures 1 et 3 et la répartition des bandes de fréquences dans les faisceaux de la Figure 1 est identique à celle de la Figure 2.

Trois stations de coordination 524, 526, 528, associées chacune à une cellule virtuelle différente, sont connectées chacune respectivement à une station d'accès satellitaire différente 80, 82, 84.

Ici chaque cellule virtuelle est confondue en termes de faisceaux avec la totalité de la couverture du bouquet auquel elle est associée.

Chaque unité de transposition en bande de fréquences d'une même station d'accès satellitaire est connectée à la station de contrôle associée à la station d'accès.

Par exemple, chaque unité de transposition 124, 126, 128, 129, 130, 132, 134 de la première station d'accès 82 est connectée à la première unité de contrôle 526 au travers de liaisons respectives de connexion 530, 532, 534, 536, 538, 540, 542.

On suppose ici à l'instar du premier mode de réalisation que chaque bande B(k) est subdivisée en trois sous-bandes SB(k, j), j variant de 1 à 3 et que chaque unité de transposition comprend trois unités de transposition en sous-bande non représentées sur la Figure 6.

La première unité de contrôle de cellule virtuelle 526 est configurée pour gérer des communications dans lesquelles les canaux de transmission attribués utilisent en tant que ressources de transmission au moins deux sous-bandes, deux d'entres elles appartenant chacune à une bande de fréquence différente.

Par exemple, l'unité de contrôle 526 est apte à traiter en tant que ressources d'un même canal de transmission la sous-bande SB(1, 2) et la sous-bande SB(7,2) affectée au premier bouquet.

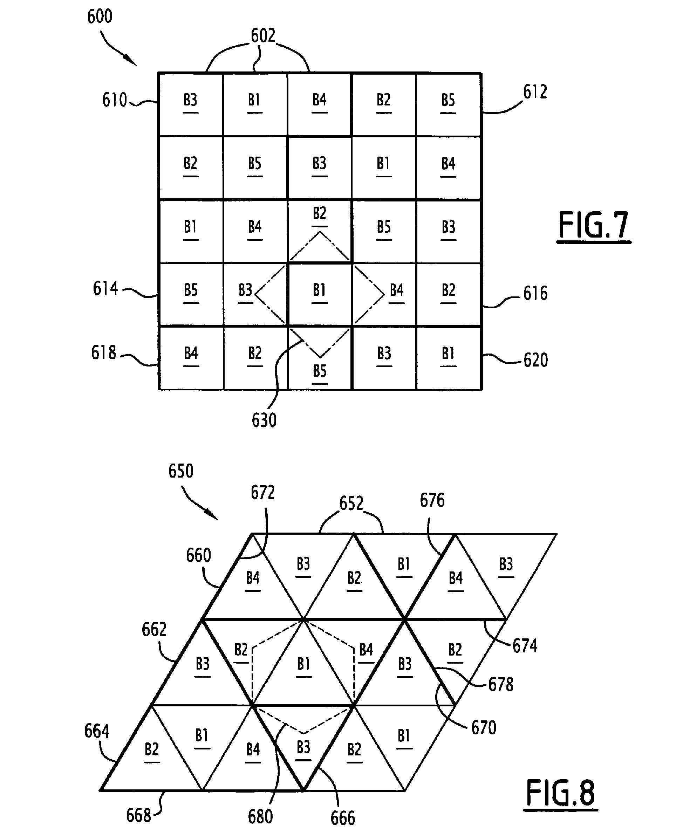

Suivant la Figure 7, une variante de couverture 600 de faisceaux 602 et de distribution des bandes de fréquences dans les faisceaux est illustrée.

Ici, 25 faisceaux sont représentés et arrangés suivant cinq rangées de cinq faisceaux de forme carrée.

Aux faisceaux de la première rangée en haut de la Figure 7, ordonnés de gauche à droite, sont affectés respectivement dans cet ordre les bandes de fréquences B3, B1, B4, B2, B5.

Aux faisceaux de la deuxième rangée, ordonnés de gauche à droite sont affectées respectivement dans cet ordre les bandes de fréquences B2, B5, B3, B1, B4.

Aux faisceaux de la troisième rangée, ordonnés de gauche à droite sont affectées respectivement dans cet ordre les bandes de fréquences B1, B4, B2, B5, B3.

Aux faisceaux de la quatrième rangée, ordonnés de gauche à droite sont affectées respectivement dans cet ordre les bandes de fréquences B5, B3, B1, B4, B2.

Aux faisceaux de la cinquième rangée, ordonnés de gauche à droite sont affectées respectivement dans cet ordre les bandes de fréquences B4, B2, B5, B3, B1.

Un premier bouquet 610 dont le contour est tracé en traits gras comprend les trois premiers faisceaux de la première rangée et les deux premiers faisceaux de la deuxième rangée.

Un deuxième bouquet 612 dont le contour est de forme conjuguée au contour du premier bouquet 610 comprend les derniers faisceaux de la première rangée et les trois derniers faisceaux de la deuxième rangée.

Un troisième bouquet 614 dont le contour est tracé en traits gras comprend les trois premiers faisceaux de la troisième rangée et les deux premiers faisceaux de la quatrième rangée.

Un quatrième bouquet 616 dont le contour est de forme conjuguée au contour du troisième bouquet comprend les deux derniers faisceaux de la troisième rangée et les quatre derniers faisceaux de la quatrième rangée.

Un cinquième bouquet 618, représenté partiellement sur la Figure 7, comprend les trois premiers faisceaux de la cinquième rangée.

Un sixième bouquet 620, représenté partiellement sur la Figure 7, comprend les trois premiers faisceaux de la cinquième rangée.

Avec une telle configuration, à l'instar de la configuration des bouquets de faisceaux de forme hexagonale des Figures 1 et 2, chaque bouquet 610, 612, 614, 616 correspond à un même motif de réutilisation des bandes de fréquences, et comprend au moins deux faisceaux satellitaires, ici cinq faisceaux, aucun bouquet pris parmi deux bouquets quelconques n'ayant un faisceau commun.

Chaque bouquet 610, 612, 614, 616, 618, 620 est associé à une station d'accès satellitaire différente.

Une cellule virtuelle 630 est représentée à titre d'exemple et gérée par une unité de contrôle non représentée.

La cellule virtuelle 630 comprend des ressources de transmission fréquentielles et spatiales qui sont les sous-bandes de la totalité de la bande de fréquences B1 du troisième faisceau en partant de la gauche de la quatrième rangée, et les sous-bandes d'une partie des bandes B2, B3, B4 et B5 des faisceaux adjacents aux côtés du troisième faisceau de la quatrième rangée.

Suivant la Figure 8, une deuxième variante de couverture 650 de faisceaux 652 et de distribution des bandes de fréquences dans les faisceaux est proposée.

Dans cette variante, la forme de la section d'un faisceau quelconque 652 est triangulaire.

Ici, 18 faisceaux 652, formant globalement un losange, sont représentés et arrangés suivant trois rangées 660, 662, 664 de six faisceaux, deux triangles adjacents d'une même rangée étant disposés en tête bêche.

La bande totale de fréquences Btotale est subdivisée en quatre bandes B1, B2, B3 et B4.

Aux faisceaux de la première rangée 660, ordonnés de gauche à droite, sont affectés respectivement dans cet ordre les bandes de fréquences B4, B3, B2, B1, B4, B3.

Aux faisceaux de la deuxième rangée 662, rangés de gauche à droite sont affectés respectivement dans cet ordre les bandes de fréquences B3, B2, B1, B4, B3, B2.

Aux faisceaux de la troisième rangée 664, rangés de gauche à droite sont affectés respectivement dans cet ordre les bandes de fréquences B2, B1, B4, B3, B2, B1.

Un premier bouquet 666 dont le contour de forme triangulaire est tracé en traits gras comprend les deuxième, troisième et quatrième faisceaux de la deuxième rangée 662 et le quatrième faisceau de la troisième rangée 664 en partant de la gauche.

Un deuxième bouquet 668 dont le contour de forme conjuguée au contour du premier bouquet 666 est tracé en traits gras, comprend le premier faisceau de la deuxième rangée 662 et les trois premiers faisceaux de la troisième rangée 664.

Un troisième bouquet 670, illustré partiellement sur la Figure 8, comprend le cinquième faisceau de la deuxième rangée 662 en partant de la gauche et les deux derniers faisceaux de la troisième rangée 664.

Un quatrième bouquet 672, illustré partiellement sur la Figure 8, comprend les trois premiers faisceaux de la première rangée 660.

Un cinquième bouquet 674, illustré partiellement sur la Figure 8, comprend les deux derniers faisceaux de la première rangée 660.

Un sixième 676 bouquet et un septième 678 bouquet, illustrés partiellement sur la Figure 8, comprennent respectivement le quatrième faisceau de la première ligne 660 et le dernier faisceau de la deuxième ligne 662.

Avec une telle configuration, à l'instar de la configuration des bouquets de faisceaux de forme hexagonale ou de forme carré chaque bouquet 610, 612, 614, 616 correspond à un même motif de réutilisation des bandes de fréquences, et chaque bouquet comprend au moins deux faisceaux satellitaires, ici cinq faisceaux, aucun bouquet pris parmi deux bouquets quelconques n'ayant un faisceau commun.

Chaque bouquet 666, 668 est associé à une station d'accès satellitaire différente.

Une cellule virtuelle 680 est représentée à titre d'exemple par un contour de forme hexagonale en traits pointillés.

La ressources de transmissions qui forment la cellule virtuelle 680 sont gérées par une unité de contrôle non représentée et comprennent la bande B1 du faisceau central du premier bouquet 666 et des portions de bandes B2, B3, B4 des faisceaux adjacents au faisceau central par un côté.

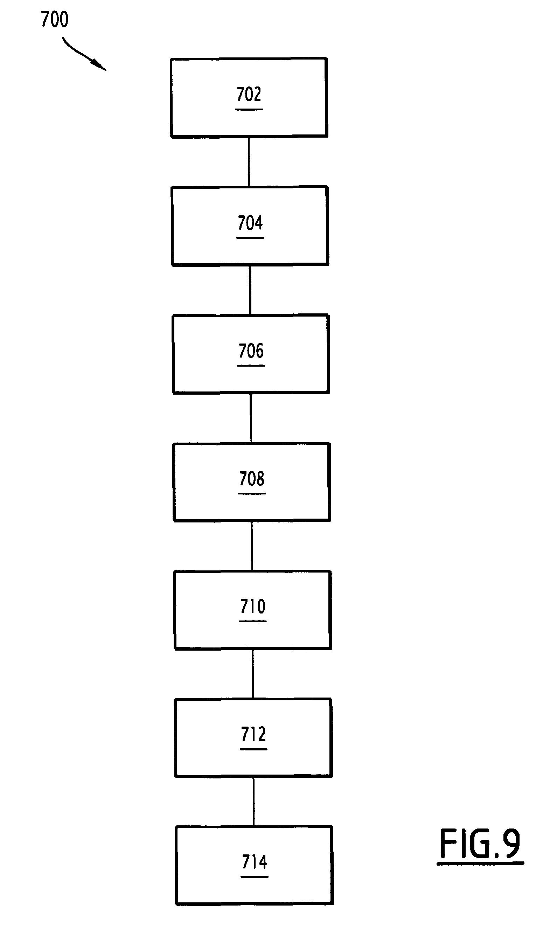

Suivant la Figure 9 un procédé de gestion 700 de ressources de transmissions du système de la Figure 1 appliqué à un terminal utilisateur quelconque géré par une ou plusieurs unités de coordination comprend un ensemble d'étapes 702, 704, 706, 708 ; 710, 712 et 714.

Dans la première étape 702, le terminal effectue une mesure de type large bande des qualités des signaux radioélectrique reçus dans les sous-bandes de fréquence de la cellule virtuelle dont il dépend.

Dans la deuxième étape 704, le terminal envoie sur son canal de communication actuellement en vigueur une information de qualité de transmission dénommée CQI, représentative des qualités transmission des sous-bandes de fréquences de la cellule virtuelle dont le terminal dépend.

Dans la troisième étape 706, la station d'accès qui dessert le faisceau dans lequel se trouve le terminal utilisateur retransmet les informations de CQI à l'unité de contrôle qui gère la cellule virtuelle de laquelle dépend le terminal.

Dans la quatrième étape 708, l'unité de coordination met en oeuvre divers algorithmes de détermination des paramètres de transmission du canal de transmission que doit utiliser le terminal parmi lesquelles figure obligatoirement un algorithme de détermination de une ou plusieurs sous-bandes et de faisceaux correspondants.

Les autres algorithmes de détermination des paramètres de transmission du canal de transmission sont par exemple, des algorithmes de détermination de codes d'étalement et/ou de tranches de temps, des algorithmes d'adaptation de taux de codage utilisant un ou plusieurs codes, des algorithmes d'adaptation de diverses modulations au travers de leur nombre d'états, ou encore des algorithmes d'adaptation de puissance. Les tâches de mise en oeuvre des algorithmes sont supposées ici être mises en oeuvre au niveau de l'unité de contrôle seulement, les taches exécutées par la station d'accès étant limitées à la formation de faisceaux et au chargement de chacun des faisceaux en fonction des sous-bandes allouées des canaux de transmission des terminaux.

Ainsi dans l'étape 708, l'unité de contrôle alloue à chaque terminal utilisateur dont elle a la charge des ressources de transmission comprenant au moins des sous-bandes de fréquences associées à des faisceaux, et le cas échéant d'autres ressources parmi des durées, des sous-bandes de fréquences, des codes, qui correspondent aux meilleures performance de propagation ou meilleures performances de capacité en terme de débit pour le système, ceci étant effectué d'après les mesures de qualité des informations de CQI de la cellule virtuelle envoyées par le terminal.

Les ressources de transmission comprennent obligatoirement des canaux fonctionnant dans une ou plusieurs sous-bandes, la largeur d'une-sous bande étant égale à au moins à 2,5 MHz.

Dans l'étape 708, l'unité de contrôle élabore et envoie au terminal un message de commande inclus dans un signal de signalisation.

Lorsque l'information de qualité des canaux CQI envoyée par le terminal indique qu'il est préférable d'utiliser une autre ressource de transmission que celle actuellement en vigueur, l'unité de contrôle alloue un nouveau canal de transmission dans le message de commande et indique au terminal que ses données utilisent un autre canal de transmission.

Dans l'étape 708, l'unité de contrôle continue de recevoir sur le premier canal et reçoit en parallèle sur le deuxième canal de transmission qui a été prescrit au terminal.

Dans l'étape 710, le terminal reçoit sur le premier canal l'ordre de commuter sur le deuxième canal en émission et en réception.

Le terminal prépare la mise en oeuvre de la transmission sur le deuxième canal et bascule ensuite sur le deuxième canal et émet les messages de service et de signalisation sur le deuxième canal.

Dans l'étape 712, la station d'accès qui a été configurée pour associer le deuxième canal au terminal réachemine le signal radioélectrique qui a été transposé et amplifié à l'unité de contrôle.

Dans l'étape 714, lorsque l'unité de contrôle reçoit les messages du terminal sur le deuxième canal, l'unité de contrôle libère les ressources du premier canal qui deviennent disponibles.

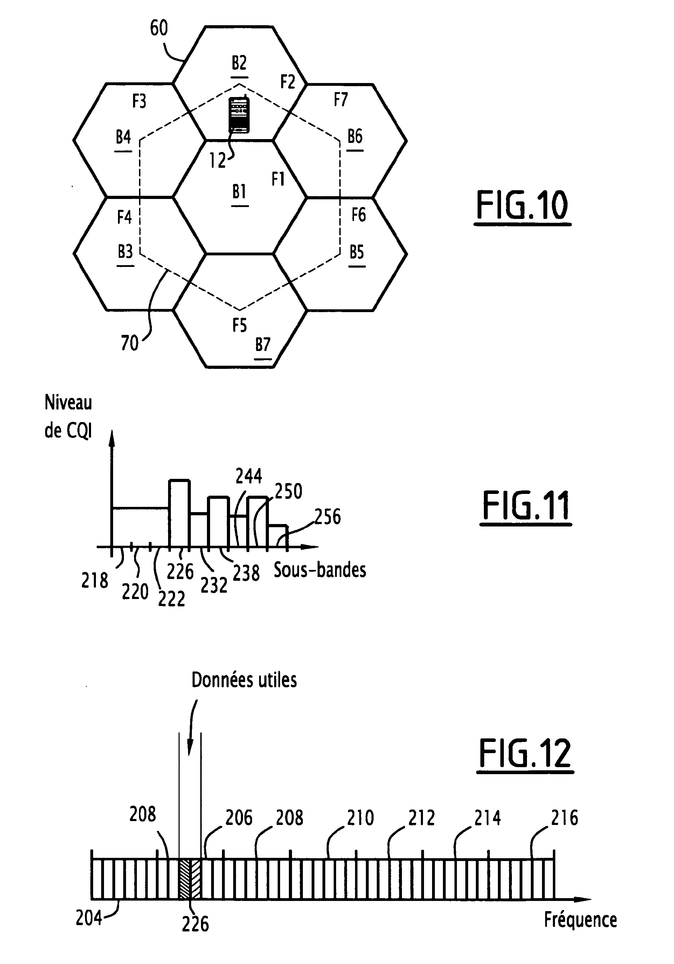

Suivant la Figure 10, une première position du terminal 12 par rapport au premier bouquet 60 est représentée à un premier instant t1.

Dans cette configuration, le terminal 12 est situé dans la couverture du faisceau F2 qui opère dans la bande B2.

Dans cette configuration, il a été déterminé au préalable de rattacher le terminal 11 à la première cellule virtuelle 70 géré par la première unité de coordination 102.

Suivant la Figure 11, le terminal 12 se trouve dans des conditions de transmission propices pour recevoir dans l'ordre de préférence des signaux dans la sous-bande 226 de B2, puis dans la sous-bande 238 de B4 et la sous-bande 250 de B6, puis dans la bande B1, puis dans la sous-bande 232 de B3 et la sous-bande 244 de B5, puis dans la sous-bande 256 de B7.

Suivant la Figure 12, deux unités de la sous-bande 226 sont attribuées au canal de transmission du terminal 12.

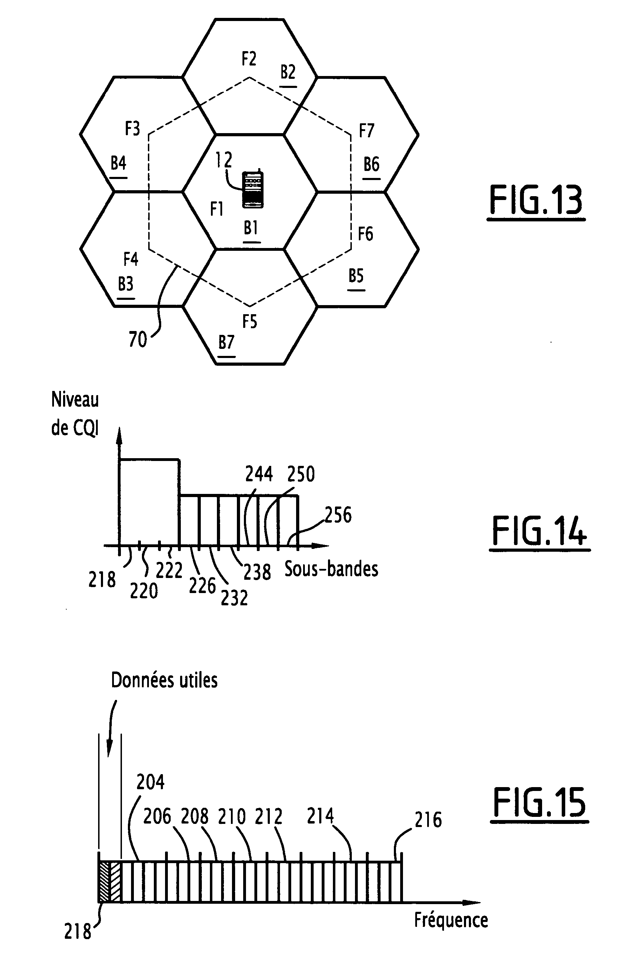

Suivant la Figure 13, une deuxième position du terminal 12 par rapport au premier bouquet 12 est représentée à un deuxième instant t2, postérieur au premier instant t1.

Il apparait que la position du terminal 12 a évoluée par rapports aux faisceaux et témoigne d'un mouvement relatif.

Il importe peu que le mouvement relatif du terminal soit causé par le mouvement du terminal par rapport à la Terre ou par le dépointage de l'antenne du satellite.

Dans cette deuxième position, le terminal 12 est situé dans la couverture du faisceau F1 qui opère dans la bande B1.

Le terminal 11 est toujours rattaché à la première cellule virtuelle 70 gérée par la première unité de contrôle.

Suivant la Figure 14, le terminal se trouve dans des conditions de transmission propices pour recevoir dans l'ordre de préférence des signaux dans la totalité de la bande B1, c'est à dire dans les trois sous-bandes 218, 220, 222, puis dans les sous-bandes 226, 232, 238 244, 250, 256 incluses respectivement dans les bandes B2, B3, B4, B5, B6, B7.

Suivant la Figure 15, les deux unités de la sous-bande 218 sont attribués au canal de transmission du terminal 12.

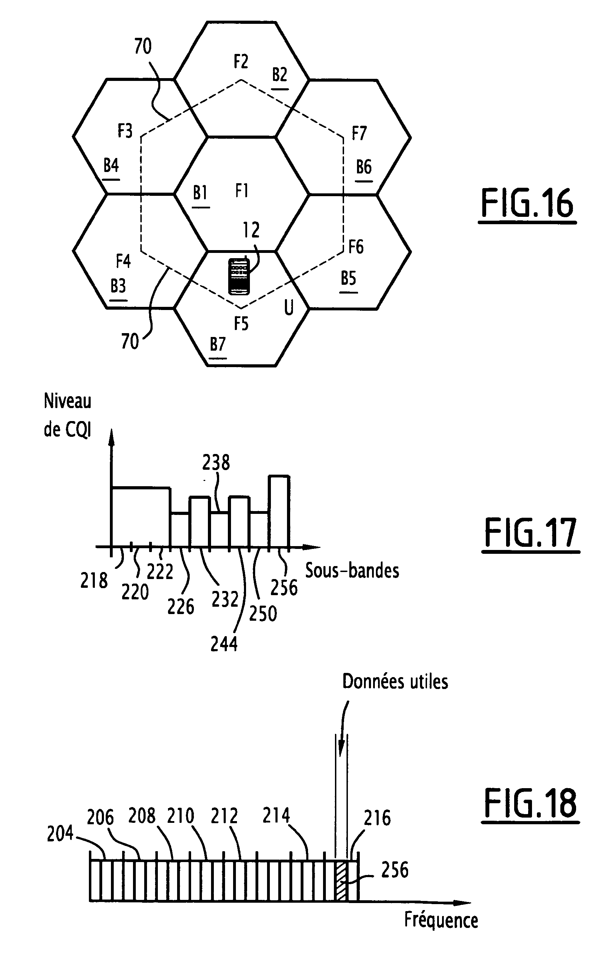

Suivant la Figure 16, une troisième position du terminal 12 par rapport au premier bouquet 60 est représentée à un troisième instant t3, postérieur au deuxième instant t2.

Dans cette configuration, le terminal 12 est situé dans la couverture du faisceau F5 qui opère dans la bande B7.

Le terminal 12 est toujours rattaché à la première cellule virtuelle 70 gérée par la première unité de contrôle 102.

Suivant la Figure 17, le terminal 12 se trouve dans des conditions de transmission propices pour recevoir dans l'ordre de préférence des signaux dans la sous-bande 256 de la bande B7, puis dans la sous-bande 244 de B5 et la sous-bande 252 de B3, puis dans la sous-bande 250 de B6, la sous-bande 238 de B4 et la sous-bande 226 de B2.

Suivant la Figure 18, les deux unités fréquentielles de la sous-bande 256 sont attribuées à la liaison du terminal 12.

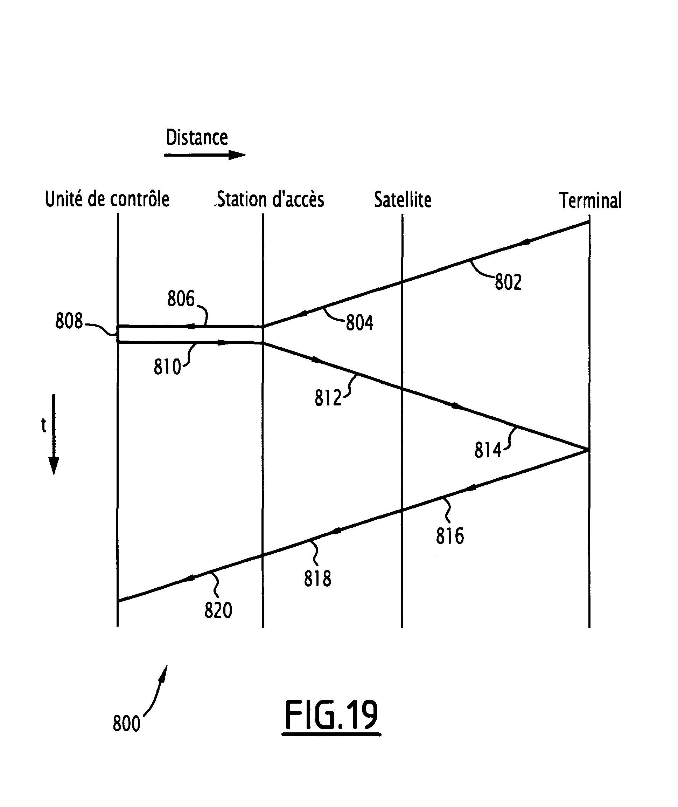

Suivant la Figure 19, un procédé de changement de ressources 800 de transmission à l'intérieur d'une même cellule virtuelle comprend une succession d'étapes 802, 804, 806, 808, 810, 812, 814, 816, 818, 820.

Dans la première étape 802, le terminal, préalablement rattaché à une cellule virtuelle dispose d'une première liste des sous-bandes de fréquences utilisées dans la cellule virtuelle, et effectue une mesure de type large bande de la qualité de transmission de chaque sous-bande de la cellule virtuelle à laquelle il est rattachée, la totalité des sous-bandes de la cellule virtuelle appartenant à un même bouquet de faisceaux ou à plusieurs bouquets de faisceaux.

Dans la même étape 802, le terminal envoie vers le satellite sur un premier canal de transmission utilisant une ou plusieurs sous-bandes de la cellule virtuelle à laquelle il est rattaché, un premier message contenant des informations représentatives de la qualité de transmission de chaque sous-bande administrée par l'unité de contrôle de la cellule virtuelle.

Dans la deuxième étape 804, le satellite retransmet vers une ou plusieurs stations d'accès satellitaire, le premier message en fonction de la ou des sous-bandes du premier canal.

Dans l'étape 806, la ou les stations d'accès préalablement configurées pour aiguiller le message contenu dans la ou les sous-bandes du message reçu vers l'unité de contrôle associée, envoie le premier message à l'unité de contrôle associée à la cellule virtuelle actuelle de rattachement du terminal.

Dans l'étape 808, l'unité de contrôle à partir des informations de qualité des sous-bandes de la cellule virtuelle actuelle et d'une liste des canaux libres de la même cellule virtuelle, détermine les paramètres de transmission d'un deuxième canal comprenant une ou plusieurs sous-bandes pour lequel les conditions de réception radioélectriques sont plus favorables que celles du premier canal, lorsqu'un tel deuxième canal existe.

Dans la même étape 808, l'unité de contrôle réserve la ou les sous-bandes du deuxième canal de transmission et prépare un deuxième message à destination du terminal contenant des informations d'identification de la ou des nouvelles sous-bande du deuxième canal et un ordre de basculement du premier canal vers le deuxième canal.

Dans l'étape 810, l'unité de contrôle envoie le deuxième message sur les unités de transposition d'une ou plusieurs stations d'accès correspondant à la ou les sous-bandes et le ou les faisceaux empruntés par le premier canal.

Dans l'étape 812, la ou les stations d'accès relaient le deuxième message sur le ou les faisceaux actuellement en vigueur dans lequel a circulé le premier message.

Dans l'étape suivante 814, le satellite retransmet vers le terminal le deuxième message.

Dans l'étape 816, dès réception et décodage du deuxième message, le terminal exécute l'ordre de basculement du premier canal sur le deuxième canal et envoie au satellite tout nouveau message suivant ou troisième message de service ou de signalisation dans la ou les sous-bandes utilisées par le deuxième canal.

Dans l'étape 818, le satellite retransmet vers la ou les stations d'accès de formation du bouquet, le troisième message du terminal.

Dans l'étape 820, la ou les stations d'accès, préalablement configurées pour aiguiller vers l'unité de contrôle le troisième message utilisant la ou les sous-bandes du deuxième canal de transmission, envoient le troisième message à l'unité de commande associée à la cellule virtuelle dont dépend le terminal.

Dans la même étape 820, l'unité de contrôle vérifie l'effectivité du basculement sur le deuxième canal, et libère les ressources fréquentielles et spatiales du premier canal, c'est-à-dire la ou les sous-bandes et les faisceaux associés, attribuées au deuxième canal.

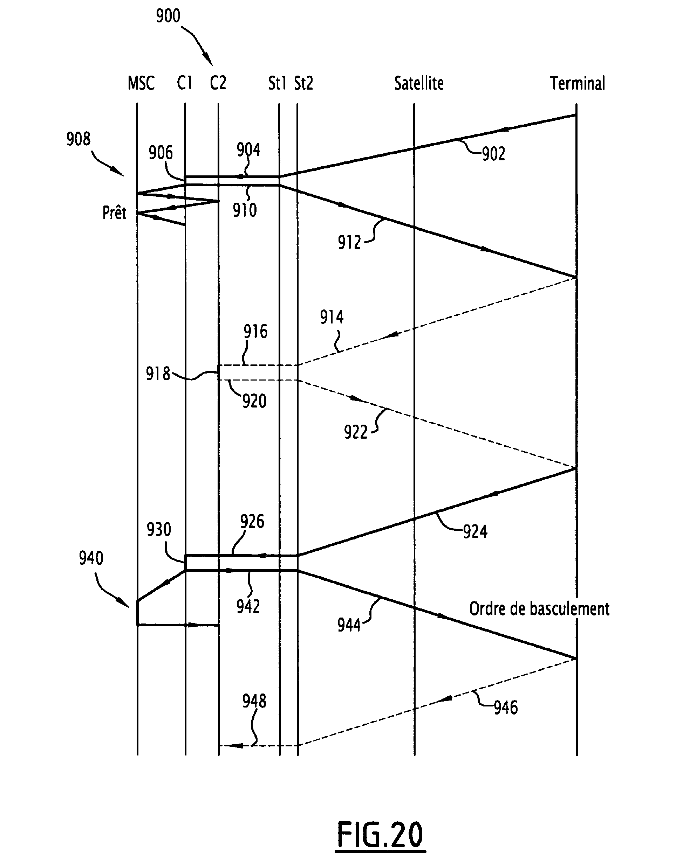

Suivant la Figure 20, un procédé de changement de ressources de transmission avec changement de cellule virtuelle comprend un ensemble d'étapes avec des échanges de messages au travers de signaux radioélectriques entre les diverses entités de communication du système de la Figure 1.

Les entités de communication comprennent un terminal, un satellite, une station d'accès satellitaire ou plusieurs stations d'accès satellitaire d'un premier groupe de stations d'accès désigné par St1, une station d'accès satellitaire ou plusieurs stations d'accès satellitaire d'un deuxième groupe d'accès désigné par St2, une première unité de contrôle d'une première cellule virtuelle, désignée par C1, une deuxième unité de contrôle d'une deuxième cellule virtuelle, désignée par C2, et un centre de commutation mobile d'accès à débit élevé, désigné par MSC.

Ici, la première unité de contrôle C1 de la première cellule virtuelle est configurée pour gérer au moins une partie des ressources de transmission en termes de sous-bandes et de faisceaux de la ou des stations d'accès du premier groupe St1.

Ici, la deuxième unité de contrôle C2 de la deuxième cellule virtuelle est configurée pour gérer au moins une partie des ressources de transmission en termes de sous-bandes et de faisceaux de la ou des stations d'accès du deuxième groupe St2.

Il est à remarquer qu'un groupe quelconque de stations d'accès parmi St1 et St2 peut être limité à une seule station d'accès satellitaire.

Au préalable pour chaque unité de contrôle d'une cellule virtuelle, une architecture permanente ou modifiable de connexions de l'unité de contrôle sur la ou les stations de d'accès a été implantée pour aiguiller les messages sur les faisceaux. Cette architecture se décline au niveau de connexions à des unités de transposition en bandes de fréquence et au niveau de connexions à des unités de transposition en de sous-bandes de fréquence.

Dans une première étape 902, le terminal, préalablement rattaché à la première cellule virtuelle en tant que cellule virtuelle actuelle, dispose d'une première liste de sous-bandes de fréquence utilisées dans la première cellule virtuelle, et effectue une mesure de type large bande de la qualité de transmission de chaque sous-bande de fréquences de la première cellule virtuelle.

Dans la même étape 902, le terminal envoie vers le satellite sur un premier canal de transmission actuellement en vigueur et utilisant une ou plusieurs sous-bandes de fréquences un premier message contenant des informations représentatives de la qualité de chaque sous-bande administrée par l'unité de contrôle de la première cellule virtuelle actuellement en vigueur.

Ainsi, une configuration dans laquelle deux-sous bandes sont gérées par la même unité de commande et sont associées chacune à un faisceau différent et/ou à un bouquet différent est possible.

Dans la même étape 902, le satellite retransmet vers la ou les premières stations d'accès du groupe St1 de formation de faisceaux le premier message émis par le terminal.

Dans une étape suivante 904, la station d'accès ou les stations d'accès du premier groupe St1, préalablement configurées pour aiguiller le premier message, empruntant la ou les sous-bandes du premier canal vers la première unité de contrôle de la première cellule virtuelle, envoie le premier message à la première unité de contrôle de cellule virtuelle.

Dans une étape suivante 906, la première unité de commande C1 à partir des informations de qualité des sous-bandes de la première cellule virtuelle et d'un ensemble de deuxièmes listes des ressources de transmission des cellules virtuelles adjacentes à la première cellule virtuelle en termes de faisceaux, détermine si un changement de ressources et de cellule virtuelle est requis.

Lorsqu'un changement de cellule virtuelle est requis, dans la même étape 906, la première unité de commande C1 détermine la deuxième cellule virtuelle adjacente en termes de faisceaux les plus aptes à assurer de bonnes conditions de propagation pendant une longue durée.

La deuxième cellule virtuelle sur laquelle le basculement de canal a été décidé est associée à la deuxième unité de contrôle.

Deux étapes 908 et 910 sont ensuite exécutées en parallèle.

Dans une étape 908, une nouvelle connexion ou nouveau circuit à débit élevé du côté du réseau à haut débit est préparée par la station de commutation de mobilité MSC et les deux unités de contrôle C1, C2 de cellule virtuelle aux travers d'échanges de signalisations. Lorsque le nouveau circuit de connexion au réseau à débit élevé est prêt, un avertissement de cet état de disponibilité et de réservation du nouveau circuit de connexion est envoyé à la première unité de contrôle de cellule virtuelle C1.

Dans l'étape 910, la première unité de contrôle de cellule virtuelle C1 envoie à la ou les stations d'accès du premier groupe St1, un deuxième message au terminal en empruntant la ou les sous-bandes attribuées au premier canal actuellement en vigueur.

Le deuxième message comprend un ordre de préparation d'un basculement sur une deuxième canal, une information d'identification de la deuxième cellule virtuelle sur laquelle basculer et une troisième liste des sous-bandes à balayer pour effectuer une mesure de type large bande de l'ensemble des canaux offerts par la deuxième cellule virtuelle, et les caractéristiques d'un canal de signalisation actif en permanence et partagé avec la deuxième cellule virtuelle.

Dans une étape suivante 912, la station ou les stations d'accès du premier groupe St1 envoient vers le satellite sur le premier canal actuellement en vigueur et formé d'une ou plusieurs sous-bandes le deuxième message destiné au terminal.

Dans la même étape 912, le satellite retransmet vers le terminal le deuxième message au terminal.

Dans une étape suivante 914, le terminal reçoit le deuxième message et le décode.

Dans la même étape 914, le terminal envoie au satellite dans le canal de signalisation permanent et partagé de la deuxième cellule virtuelle un troisième message contenant des informations représentatives de la qualité large bande de chaque sous-bande administrée par l'unité de contrôle de la deuxième cellule virtuelle C2.

Dans la même étape 914, le satellite retransmet vers la station d'accès ou les stations d'accès du deuxième groupe St2 configurées pour desservir le deuxième canal de signalisation partagé au travers d'une sous-bande spécifique attribuée partiellement ou totalement le troisième message.

Dans une étape suivante 916, la station d'accès ou les stations d'accès du deuxième groupe St2, préalablement configurées pour aiguiller le troisième message empruntant la sous-bande spécifique d'une largeur étroite allouée au canal de signalisation spécifique partagée par la deuxième cellule virtuelle envoient le troisième message à la deuxième unité de contrôle de cellule virtuelle C2.

Dans une étape suivante 918, l'unité de commande C2 à partir des informations de qualité des sous-bandes de la deuxième cellule virtuelle mesurée, déterminées et fournies par le terminal et à partir d'une quatrième liste de canaux de transmission libres de la deuxième cellule virtuelle, détermine un troisième canal ou nouveau canal formé d'une ou plusieurs sous-bandes compris dans la quatrième liste des canaux libres de la deuxième cellule virtuelle.

Dans la même étape 918, la deuxième unité de commande C2 réserve la ou les sous-bandes du troisième canal, et prépare un quatrième message à destination du terminal contenant des informations d'identification du troisième canal et de la ou des sous-bandes allouées au troisième canal.

Dans une étape suivante 920, la deuxième unité de contrôle C2 envoie le quatrième message à la station ou les stations d'accès du deuxième groupe St2 sur le deuxième canal de signalisation.

Dans une étape suivante 922, la ou les stations d'accès du deuxième groupe St2 relaient le quatrième message sur une ou plusieurs unités de transposition correspondant à un ou plusieurs faisceaux associés au deuxième canal de signalisation dédié.

Dans la même étape 922, le satellite retransmet vers le terminal sur le ou les faisceaux associés au deuxième canal de signalisation dédié le quatrième message envoyé par la ou les stations d'accès du deuxième groupe St2.

Dans une étape suivante 924, le terminal reçoit et décode le quatrième message, et enregistre les informations de la ou des nouvelles sous-bandes attribuées par la deuxième unité de contrôle C2.

Puis, dans la même étape 924 le terminal envoie à la station ou les stations d'accès du premier groupe St1 au travers du satellite un cinquième message qui indique que le terminal est prêt à basculer sur le troisième canal ou nouveau canal de la deuxième cellule virtuelle.

Dans une étape 926 suivante, la station ou les stations d'accès du premier groupe St1 transposent le cinquième message dans une ou plusieurs sous-bandes correspondant à la ou les sous-bandes et au ou les faisceaux empruntés par le premier canal, et acheminent le cinquième message à la première unité de contrôle C1.

Dans une étape suivante 930, la première unité de contrôle C1 reçoit et décode le cinquième message d'annonce selon lequel le terminal est prêt à basculer sur le nouveau canal ou troisième canal.

Dans la même étape 930, la première unité de contrôle C1 prépare un sixième message destiné au terminal contenant un ordre de basculer sur la deuxième unité de contrôle de la deuxième cellule virtuelle et d'utiliser le nouveau canal de transmission.

Après l'étape 930, deux étapes 940 et 942 sont exécutées en parallèle.

Dans l'étape 940, la deuxième unité de contrôle C2 envoie un ordre à la station de commutation mobile MSC d'activer la deuxième connexion entre la deuxième unité de contrôle C2 et le réseau haut débit. La station de commutation mobile MSC envoie alors un septième message à la deuxième station de contrôle C2 selon lequel la deuxième connexion haut débit fonctionne.

Dans l'étape 942, la première unité de contrôle C1 envoie à la première ou les stations d'accès du premier groupe St1 le sixième message destiné au terminal et contenant l'ordre de basculer sur le troisième canal.

Dans l'étape 944, la station ou les stations d'accès du premier groupe St1 acheminent le sixième message vers le terminal au travers du satellite.

Le sixième message est acheminé dans la ou le sous-bandes du premier canal actuellement en vigueur et contenus dans le ou les premiers faisceaux.

Tant que l'unité de connexion n'a pas reçu un message de la MSC selon lequel le basculement fonctionne, la ou les premières sous-bandes restent attribuées au terminal.

Dans l'étape 946, le terminal exécute l'ordre de basculement en transmettant vers la station ou les stations d'accès du deuxième groupe St2 au travers du satellite tout nouveau message suivant, sur la ou les sous-bande du troisième canal.

Dans une étape suivante 948, la station ou les stations d'accès du deuxième groupe St2 envoient chaque nouveau message à la deuxième unité de contrôle C2.

Il est à remarquer que lorsque la MSC a détecté que le basculement a été correctement effectué, il envoie une autorisation à la première unité de contrôle de libérer le ou les premiers canaux contenus dans la ou les premières sous-bandes.

En variante, un procédé de basculement de ressources entre deux cellules virtuelle peut impliquer une seule station d'accès pour laquelle une première partie de ses ressources en termes de sous-bandes est gérée par la première station de contrôle de cellule virtuelle C1, et une deuxième partie de ses ressources en termes de sous-bandes est gérée par la deuxième station de contrôle de cellule virtuelle C2.

Il apparait dans le procédé de changement de ressources entre deux cellules virtuelles un temps de mise en oeuvre beaucoup plus long que le temps de mise en oeuvre du procédé de changement de ressources au sein d'une même cellule virtuelle en raison des temps d'aller et retour d'un plus longs dans le cas d'un système de communication par satellite et d'un nombre plus élevé d'échanges requis dans le cas d'un changement de cellule virtuelle.

L'intérêt d"utiliser une celle virtuelle correspondant à un nombre de faisceaux élevé est manifeste, puisque les temps et volume de signalisation requis pour le changement de ressource au sein d'une même cellule virtuelle sont plus petits.

D'un autre côté, il convient de disposer de plusieurs unités de contrôle et de limiter le nombre de stations d'accès rattachés par unité de contrôle de façon à limiter le traitement par unité de calcul.

L'aptitude du terminal à sonder sur une large bande les canaux d'une même cellule virtuelle et d'utiliser au moins deux sous-bandes appartenant à deux bandes de fréquences différentes permet d'augmenter la souplesse de gestion de ressources de transmission en ne limitant pas cette gestion à la prise en compte de la forme et de la répartition des faisceaux mais en l'étendant à la prise en compte des brouillages de terminaux fonctionnant dans un même faisceau.

La possibilité d'utiliser un canal multifaisceaux permet de lever cette difficulté lorsque les faisceaux bougent relativement vite par rapport aux terminaux.

## Revendications

1. Système de radiocommunication cellulaire à satellite comprenant :
un satellite de communication (6) transparent, servant de relai, placé sur une orbite géostationnaire ou une orbite elliptique hautement inclinée,
au moins une station d'accès satellitaire (80, 82, 84), d'émission et de réception, configurées pour émettre et pour recevoir des messages de service et de signalisation vers et depuis le satellite (6) sur une première voie radioélectrique bidirectionnelle (25),
un ensemble de terminaux utilisateurs (10, 12, 14) configurés pour recevoir et pour émettre les messages de service et de signalisation depuis et vers le satellite (6) sur une deuxième voie radioélectrique bidirectionnelle (44), la deuxième voie bidirectionnelle (44) étant composée d'une deuxième voie descendante aller (48) et d'une deuxième voie montante retour(46),
au moins une unité de contrôle (100, 102, 104) d'une cellule virtuelle (70, 72, 74) reliée à une ou plusieurs station d'accès satellitaire (80, 82, 84 ; 586), une cellule virtuelle (70, 72, 74) étant un ensemble de ressources fréquentielles et spatiales de transmission,
le satellite de communication (6) étant configuré pour émettre suivant la deuxième voie descendante aller (48) et à recevoir suivant la deuxième voie montante retour (46) les messages de service et de signalisation reçus et émis par l'ensemble de terminaux, les messages de service et de signalisation étant répartis dans un ensemble de faisceaux satellitaires Fi (50) de radiocommunication,
chaque faisceau satellitaire (50) F(i) étant identifié par un premier indice entier d'identification de faisceau i,
chaque faisceau satellitaire (50) F(i) définissant par sa portée radioélectrique au sol une couverture satellitaire d'une cellule satellitaire, et étant associé à une bande de fréquence prise parmi un nombre prédéterminé Nb de bandes de fréquences différentes B(k), chaque bande de fréquence B(k) étant identifiée par un deuxième indice entier d'identification de bande k, avec k variant de 1 à Nb,
chaque bande de fréquence B(k) étant subdivisée en une ou plusieurs sous-bandes de fréquence SB(k, j), chaque sous-bande étant identifiée par un couple d'indices (k, j) dans lequel k est l'indice de la bande et j est un entier compris entre 1 et un entier Nsb(j) dépendant k,
l'ensemble des faisceaux satellitaires (50) étant configuré de sorte qu'une bande allouée B(g(i)) suivant une fonction de distribution g à un faisceau quelconque i est différente des bandes associées à la totalité des faisceaux adjacents au faisceau quelconque F(i), et
chaque station d'accès satellitaire (80, 82, 84 ; 586) étant associée à un bouquet compact différent (60, 62, 64) d'au moins deux faisceaux satellitaires, aucun bouquet pris parmi deux bouquets quelconques (60, 62, 64) n'ayant un faisceau commun
**caractérisé en ce que**
une ressource fréquentielle et spatiale de transmission est une sous-bande d'indice j d'une bande d'indice k attribuée à un faisceau d'indice i et est associée à un triplet (i, k, j), et
une cellule virtuelle (70, 72, 74) est un ensemble de ressources fréquentielles et spatiales de transmission tel que l'ensemble des faisceaux auxquelles elles appartiennent forment un ensemble compact de faisceaux, et
chaque terminal (10, 12, 14) est associé à une cellule virtuelle et est configuré pour recevoir de l'unité de contrôle (100, 102, 104) de la cellule virtuelle associée et pour exécuter une commande de configuration d'un canal de transmission pour y émettre et recevoir des messages, le canal utilisant en même temps au moins deux ressources fréquentielles et spatiales dont les indices de bande sont différents.
chaque unité de contrôle (100, 102, 104) d'une cellule virtuelle (70, 72, 74) est configurée pour gérer les ressources fréquentielles et spatiales de la cellule virtuelle qui lui est associée, et pour faire transiter les messages reçus et émis par les terminaux affectés à la cellule virtuelle de l'unité de contrôle.

2. Système de radiocommunication cellulaire à satellite selon la revendication 1, dans lequel chaque sous-bande possède une large bande de largeur supérieure ou égale à 2,5 MHz, et chaque terminal (10, 12, 14) associé à une cellule virtuelle est configuré pour mesurer en même temps la qualité de transmission de chaque sous-bande de la cellule virtuelle à laquelle il appartient.

3. Système de radiocommunication cellulaire à satellite selon l'une quelconque des revendications 1 et 2, **caractérisé en ce que** le nombre de sous-bandes par bande de fréquences est constant et les sous-bandes d'une même bande ont une même largeur.

4. Système de radiocommunication cellulaire à satellite selon l'une quelconque des revendications 1 à 3, dans lequel chaque unité de contrôle (100, 102, 104) d'une cellule virtuelle comporte une horloge de référence différente et est configurée pour synchroniser les messages émis et reçus par chaque terminal de la cellule virtuelle associée sur l'horloge de référence de la cellule virtuelle associée .

5. Système de radiocommunication cellulaire à satellite selon l'une quelconque des revendications 1 à 4, dans lequel
chaque station d'accès satellitaire (80, 82, 84 ; 586) est configurée pour émettre et recevoir les messages, correspondants au bouquet associé (60, 62, 64), et est connectée à une ou plusieurs unités de contrôle (100, 102, 104) qui gèrent les ressources fréquentielles et spatiales dont les indices de faisceaux correspondent aux faisceaux du bouquet (60, 62, 64) associés à la station d'accès (80, 82, 84 ; 586).

6. Système de radiocommunication cellulaire à satellite selon l'une quelconque des revendications 1 à 5, dans lequel une station d'accès satellitaire (80, 82, 84) est desservie par au moins deux unités de contrôle (100, 102, 104) et dans lequel au moins une des unités de contrôle qui dessert la station d'accès dessert la totalité de ses ressources fréquentielles et spatiales sur la station d'accès satellitaire (80, 82, 84).

7. Système de radiocommunication cellulaire à satellite selon l'une quelconque des revendications 1 à 5, dans lequel une unité de contrôle (100, 102, 104) dessert au moins deux stations d'accès (80, 82, 84).

8. Système de radiocommunication cellulaire à satellite selon l'une quelconque des revendications 1 à 5, dans lequel une station d'accès (586) est desservie par une seule unité de contrôle (102) et l'unité de contrôle (102) dessert seulement cette station d'accès (586).

9. Procédé de changement de ressources fréquentielles au sein d'une même cellule virtuelle au cours d'une communication d'un terminal dans un système défini selon l'une quelconque des revendications 1 à 8, comprenant des étapes suivantes :
le terminal rattaché préalablement à une cellule virtuelle dispose d'une première liste des sous-bandes de fréquences utilisées dans la cellule virtuelle, et effectue (802) une mesure de type large bande de la qualité de transmission de chaque sous-bande de la cellule virtuelle ;
le terminal envoie (802) vers l'unité de contrôle de la cellule virtuelle au travers d'un premier canal utilisant une ou plusieurs sous-bandes de la cellule virtuelle, un premier message contenant des informations représentatives de la qualité de chaque sous-bande administré par l'unité de contrôle de la cellule virtuelle ;
l'unité de contrôle à partir des informations de qualité des sous-bandes de la cellule virtuelle actuelle et d'une deuxième liste des canaux libres de la cellule virtuelle, détermine (808) les paramètres de transmission d'un deuxième canal comprenant une ou plusieurs sous-bandes qui correspond à des conditions de réception radioélectrique plus favorables que celles du premier canal, lorsqu'un tel deuxième canal existe ;
lorsqu'un deuxième canal existe, l'unité de contrôle réserve (808) la ou les sous-bandes du deuxième canal, prépare et envoie (810) un deuxième message à destination du terminal contenant des informations d'identification de la ou des nouvelles sous-bandes du deuxième canal de transmission et un ordre de basculement du premier canal vers le deuxième canal ;
après réception et décodage du deuxième message, le terminal exécute (816) l'ordre de basculement du premier canal sur le deuxième canal et envoie au satellite tout nouveau message suivant dans la ou les sous-bandes utilisées par le deuxième canal.

10. Procédé de changement de ressources de transmission avec basculement d'une première cellule virtuelle sur une deuxième cellule virtuelle au cours d'une communication d'un terminal dans un système défini selon l'une quelconque des revendications 1 à 8, comprenant les étapes suivantes :
le terminal rattaché préalablement à la première cellule virtuelle dispose d'une première liste de sous-bandes de fréquence utilisées dans la première cellule virtuelle, et effectue une mesure de type large bande de la qualité de transmission de chaque sous-bande de la première cellule virtuelle ;
le terminal envoie (902) vers la première unité de contrôle C1 au travers d'un premier canal de transmission actuellement utilisant une ou plusieurs sous-bandes de fréquence de la première cellule virtuelle un premier message contenant des informations représentatives de la qualité de chaque sous-bande administrée par la première unité de contrôle de la première cellule virtuelle actuellement en vigueur ;
ensuite, la première unité de contrôle C1, à partir des informations de qualité des sous-bandes de la première cellule virtuelle actuelle et d'un ensemble de deuxièmes listes de sous-bandes de cellules virtuelles adjacentes en termes de faisceaux, détermine (906) s'il existe une deuxième cellule virtuelle adjacente en termes da faisceaux apte à assurer pendant une longue durée des conditions de réception radioélectrique plus favorables que celles d'un canal quelconque de la première cellule virtuelle ;
lorsqu'une telle deuxième cellule virtuelle existe, une nouvelle connexion à débit élevé du côté du réseau à haut débit est préparée (908) par la station de commutation de mobilité MSC et la deuxième unité de contrôle C2 associée à la deuxième cellule virtuelle, et la première unité de contrôle C1 envoie (910) au terminal un deuxième message comprenant un ordre de préparation d'un basculement sur un deuxième canal de transmission, une information d'identification de la deuxième cellule virtuelle sur laquelle basculer et une troisième liste des sous-bandes à balayer de la deuxième cellule virtuelle pour effectuer une mesure de type large bande de l'ensemble des canaux offerts par la deuxième cellule virtuelle,
après avoir reçu le deuxième message le terminal envoie (914) à la deuxième unité de contrôle au travers d'un deuxième canal de transmission un troisième message contenant des informations représentatives de la qualité de chaque sous-bande administrée par la deuxième unité de contrôle de la deuxième cellule virtuelle C2 ;
la deuxième unité de contrôle C2 à partir des informations de qualité des sous-bandes de la deuxième cellule virtuelle mesurées, déterminées et fournies par le terminal et une quatrième liste de canaux de transmission libres de la deuxième cellule virtuelle, et détermine (918) un troisième canal formé d'une ou plusieurs sous-bandes compris dans la quatrième liste des canaux libres de la deuxième cellule virtuelle qui correspond à des conditions de réception radioélectrique plus favorables que celles du premier canal ;
la deuxième unité de contrôle C2 réserve (918) la ou les sous-bandes du troisième canal, prépare et envoie (920) sur le deuxième canal de signalisation un quatrième message à destination du terminal contenant des informations d'identification du troisième canal et de la ou des sous-bandes allouées au troisième canal ;
le terminal reçoit et décode (924) le quatrième message, et enregistre les informations de la ou des nouvelles sous-bandes attribuées par la deuxième unité de contrôle C2, puis envoie (924) à première unité de contrôle C1 un cinquième message d'annonce selon lequel il est prêt à basculer sur le troisième canal de la deuxième cellule virtuelle ;
après avoir reçu le cinquième message, la première unité de contrôle C1 envoie (940) un ordre à la station de commutation mobile MSC d'activer la deuxième connexion entre la deuxième unité de contrôle C2 et le réseau haut débit, prépare et envoie (942) au terminal un sixième message destiné contenant un ordre de basculer sur la deuxième unité de contrôle C2 de la deuxième cellule virtuelle et d'utiliser le troisième canal de transmission ;
après réception et décodage du sixième message, le terminal exécute (946) l'ordre de basculement du premier canal sur le troisième canal et envoie tout nouveau message suivant à la deuxième unité de contrôle.

## Patentansprüche

1. Zellulares Satelliten-Funkkommunikationssystem aufweisend:
einen Satelliten (6) zu transparenten Kommunikation, der als Relais dient, platziert auf einem geostationären Orbit oder einem stark geneigten elliptischen Orbit,
mindestens eine Sende-und-Empfangs-Satellitenzugangsstation (80, 82, 84), eingerichtet zum Senden und zum Empfangen von Dienst- und
Signalnachrichten zu und von dem Satelliten (6) auf einem ersten bidirektionalen Funkpfad (25),
eine Menge von Benutzerendgeräten (10, 12, 14),
eingerichtet zum Empfangen und zum Senden der Dienst- und Signalnachrichten von und zu dem Satelliten (6) auf einem zweiten bidirektionalen Funkpfad (44), wobei der zweite bidirektionale Funkpfad (44) zusammengesetzt ist aus einem zweiten Hin-Abwärtspfad (48) und einem zweiten Rück-Aufwärtspfad (46),
mindestens eine Steuereinheit (100, 102, 104) einer virtuellen Zelle (70, 72, 74), die mit einer oder
mehreren Satellitenzugangsstationen (80, 82, 84; 586) verbunden ist, wobei eine virtuelle Zelle (70, 72, 74) eine Menge von spektralen und räumlichen Senderessourcen ist,
wobei der Kommunikationssatellit (6) eingerichtet ist zum Senden entlang des zweiten Hin-Abwärtspfads (48) und
zum Empfangen entlang des zweiten Rück-Aufwärtspfads (46) der von der Menge von Endgeräten empfangenen und gesendeten Dienst- und Signalisierungsnachrichten, wobei die Dienst- und Signalisierungsnachrichten in eine Menge von Funkkommunikationssatellitenstrahlen Fi (59) eingeteilt werden,
wobei jeder Satellitenstrahl (50) F(i) durch einen ersten ganzzahligen Strahlidentifikationsindex i identifiziert wird,
wobei jeder Satellitenstrahl (50) F(i) durch seine Funkreichweite am Boden eine Satellitenabdeckung einer Satellitenzelle definiert und einem Frequenzband zugeordnet ist, genommen aus einer vorgegebenen Anzahl Nb von unterschiedlichen Frequenzbändern B(k), wobei jedes Frequenzband B(k) durch einen zweiten ganzzahligen Bandidentifikationsindex k definiert ist, wobei sich k zwischen 1 und Nb bewegt,
wobei jedes Frequenzband B(k) in ein oder mehrere Frequenzsubbänder SB(k,j) unterteilt ist, wobei jedes Subband durch ein Indexpaar (k,j) identifiziert wird, in dem k der Index des Bands und j eine ganze Zahl ist, die zwischen 1 und einer ganzen Zahl Nsb(j), die von k abhängt, liegt,
wobei die Menge von Satellitenstrahlen (50) so konfiguriert ist, dass ein Band (B(g(i)), das gemäß einer Verteilungsfunktion g irgendeinem Strahl i zugewiesen ist, unterschiedlich ist von Bändern, die der Gesamtheit von Strahlen, die zu dem irgendeinem Strahl F(i) benachbart sind, zugeordnet sind und
wobei jede Satellitenzugangsstation (80, 82, 84; 586) einer unterschiedlichen kompakten Gruppe (60, 62, 64) mit mindestens zwei Satellitenstrahlen zugeordnet ist,
wobei jede aus irgendwelchen zwei Gruppen (60, 62, 64) genommene Gruppe keinen Strahl gemeinsam hat dadurch charakterisiert, dass
eine spektrale und räumliche Senderessource ein Subband mit dem Index j eines Bandes mit dem Index k, der einem Strahl mit dem Index i zugeteilt ist, und einem Tripel (i, k, j) zugewiesen ist und
eine virtuelle Zelle (70, 72, 74) eine Menge von spektralen und räumlichen Senderessourcen ist, sodass die Menge von Strahlen, zu denen sie gehören, eine kompakte Strahlenmenge bildet und
wobei jedes Endgerät (10, 12, 14) einer virtuellen Zelle zugeordnet ist und eingerichtet ist zum Empfangen von der Steuereinheit (100, 102, 104) der zugeordneten Zelle und zum Ausführen eines Befehls zum Konfigurieren eines Übertragungskanals, um dort Nachrichten zu senden und zu empfangen, wobei der Kanal gleichzeitig mindestens zwei spektrale und räumliche Ressourcen, deren Bandindizes unterschiedlich sind, verwendet,
wobei jede Steuereinheit (100, 102, 104) einer virtuellen Zelle (70, 72, 74) eingerichtet ist zum Verwalten der spektralen und räumlichen Ressourcen der virtuellen Zelle, die ihr zugeordnet ist, und zum Durchleiten der Nachrichten, die von den Endgeräten, die der virtuellen Zelle der Steuereinheit zugeteilt sind,
empfangen und gesendet werden.

2. Zellulares Satelliten-Funkkommunikationssystem gemäß Anspruch 1, in dem jedes Subband ein breites Band mit einer Breite über oder gleich 2,5MHz hat und jedes einer virtuellen Zelle zugeordnete Endgerät (10, 12, 14) eingerichtet ist, gleichzeitig die Übertragungsqualität jedes Subbands der virtuellen Zelle, zu dem es gehört, zu messen.

3. Zellulares Satelliten-Funkkommunikationssystem gemäß einem der Ansprüche 1 und 2, dadurch charakterisiert, dass die Anzahl von Subbändern pro Frequenzband konstant ist und die Subbänder desselben Bands dieselbe Größe haben.

4. Zellulares Satelliten-Funkkommunikationssystem gemäß einem der Ansprüche 1 bis 3, in dem jede Steuereinheit (100, 102, 104) einer virtuellen Zelle eine unterschiedliche Referenzuhr aufweist und eingerichtet ist, die Nachrichten, die von jedem Endgerät der zugeordneten virtuellen Zelle gesendet und empfangen werden, mit der Referenzuhr der zugeordneten Zelle zu synchronisieren.

5. Zellulares Satelliten-Funkkommunikationssystem gemäß einem der Ansprüche 1 bis 4, in dem
jede Satellitenzugangsstation (80, 82, 84; 586) eingerichtet ist zum Senden und Empfangen der Nachrichten, die der zugeordneten Gruppe (60, 62, 64) entsprechen, und mit einer oder mehreren Steuereinheiten (100, 102, 104) verbunden ist, die die spektralen und räumlichen Ressourcen, deren Strahlindizes dem Strahl der Gruppe (60, 62, 64) entsprechen, die der Zugangsstation (80, 82, 84; 586) zugeordnet sind, verwalten.

6. Zellulares Satelliten-Funkkommunikationssystem gemäß einem der Ansprüche 1 bis 5, in dem eine Satellitenzugangsstation (80, 82, 84) von mindestens zwei Steuereinheiten (100, 102, 104) bedient wird und in dem mindestens eine der Steuereinheiten, die die Satellitenzugangsstation bedient, die Gesamtheit seiner spektralen und räumlichen Ressourcen auf der Satellitenzugangsstation (80, 82, 84) bedient.

7. Zellulares Satelliten-Funkkommunikationssystem gemäß einem der Ansprüche 1 bis 5, in dem eine Steuereinheit (100, 102, 104) mindestens zwei Zugangsstationen (80 82, 84) bedient.

8. Zellulares Satelliten-Funkkommunikationssystem gemäß einem der Ansprüche 1 bis 5, in dem eine Satellitenzugangsstation (586) von einer einzigen Steuereinheit (102) bedient wird und die Steuereinheit (102) nur diese Zugangsstation (586) bedient.

9. Verfahren zum Ändern der spektralen Ressourcen innerhalb derselben virtuellen Zelle im Laufe einer Kommunikation eines Endgeräts in einem System, definiert gemäß einem der Ansprüche 1 bis 8, aufweisend die folgenden Schritte:
das Endgerät, das vorab an eine virtuelle Zelle angebunden ist, verfügt über eine erste Liste von Frequenzsubbändern, die in der virtuellen Zelle verwendet werden, und führt (802) eine Breitbandmessung der Übertragungsqualität jedes Subbands der virtuellen Zelle durch;
das Endgerät schickt (802) zu der Steuereinheit der virtuellen Zelle über einen ersten Kanal, der ein oder
mehrere Subbänder der virtuellen Zelle verwendet, eine erste Nachricht, die Informationen enthält, die für die Qualität jedes Subbands, das von der Steuereinheit der virtuellen Zelle verwaltet wird, repräsentativ sind;
die Steuereinheit bestimmt (808), ausgehend von den Informationen über die Qualität der Subbänder der aktuellen virtuellen Zelle und einer zweiten Liste von freien Kanälen der virtuellen Zelle, die Sendeparameter eines zweiten Kanal, der ein oder mehrere Subbänder aufweist und der Funkempfangsbedingungen entspricht, die günstiger sind als die des ersten Kanals, wenn ein solcher zweiter Kanal existiert;
wenn ein zweiter Kanal existiert, reserviert (808) die Steuereinheit das oder die Subbänder des zweiten Kanals,
bereitet vor und schickt (810) eine zweite Nachricht an das Endgerät, die Informationen zum Identifizieren des oder der neuen Subbänder des zweiten Übertragungskanals und einen Befehl zum Umschalten von dem ersten Kanal zu dem zweiten Kanal enthält;
nach Empfang und Dekodieren der zweiten Nachricht führt das Endgerät den Befehl zum Umschalten von dem ersten Kanal zu dem zweiten Kanal aus (808) und schickt alle folgenden neuen Nachrichten in dem oder den Subbändern, die von dem zweiten Kanal verwendet werden.

10. Verfahren zum Ändern der Senderessourcen mit Umschalten von einer ersten virtuellen Zelle auf eine zweite virtuellen Zelle im Laufe einer Kommunikation eines Endgeräts in einem System, definiert gemäß einem der Ansprüche 1 bis 8, aufweisend die folgenden Schritte:
das Endgerät, das vorab an die erste virtuelle Zelle angebunden ist, verfügt über eine erste Liste von Frequenzsubbändern, die in der ersten virtuellen Zelle verwendet werden, und führt eine Breitbandmessung der Übertragungsqualität jedes Subbands der ersten virtuellen Zelle durch;
das Endgerät schickt (902) zu der ersten Steuereinheit C1 über einen ersten Übertragungskanal, der aktuell ein oder mehrere Frequenzsubbänder der ersten virtuellen Zelle verwendet, eine erste Nachricht, die Informationen enthält, die für die Qualität jedes Subbands, das von der ersten Steuereinheit der ersten virtuellen Zelle verwaltet wird, repräsentativ sind;
anschließend bestimmt (906) die Steuereinheit C1 ausgehend von den Informationen über die Qualität der Subbänder der ersten aktuellen virtuellen Zelle und
einer Menge von zweiten Listen von Subbändern von virtuellen Zellen, die hinsichtlich Strahlen benachbart sind, ob es eine zweite virtuelle Zelle gibt, die hinsichtlich Strahlen benachbart ist und die geeignet ist, während einer langen Dauer Funkempfangsbedingungen sicherzustellen, die günstiger sind als die jeglichen Kanals der ersten virtuellen Zelle;
wenn eine solche virtuelle Zelle existiert, wird eine neue Verbindung mit erhöhtem Durchsatz auf Seite des Netzwerks mit hohem Durchsatz von der
Mobilitätskommunikationsstation MSC und der zweiten Steuereinheit C2, die der zweiten virtuellen Zelle zugeordnet ist, vorbereitet (908) und die erste Steuereinheit C1 schickt (910) eine zweite Nachricht an das Endgerät, die einen Befehl zum Vorbereiten eines Umschaltens auf den zweiten Übertragungskanal, eine Information zum Identifizieren der zweiten virtuellen Zelle, auf die umzuschalten ist, und eine dritte Liste von abzutastenden Subbändern der zweiten virtuellen Zelle, zum Durchführen einer Breitbandmessung der Menge von Kanälen, die von der zweiten virtuellen Zelle angeboten werden, enthält,
nachdem es die zweite Nachricht empfangen hat, schickt (914) das Endgerät an die zweite Steuereinheit über einen zweiten Übertragungskanal eine dritte Nachricht,
die Informationen enthält, die für die Qualität jedes Subbands, das von der zweiten Steuereinheit der zweiten virtuellen Zelle C2 verwaltet wird, repräsentativ ist;
die zweite Steuereinheit C2 bestimmt (918) ausgehend von Informationen über die Qualität der Subbänder der zweiten virtuellen Zelle, die von dem Endgerät gemessen, ermittelt und bereitgestellt werden, und einer vierten Liste von freien Übertragungskanälen der zweiten virtuellen Zelle einen dritten Kanal, der von einem oder
mehreren Subbändern, die in der vierten Liste von freien Übertragungskanälen der zweiten virtuellen Zelle enthalten sind, gebildet wird, der
Funkempfangsbedingungen entspricht, die günstiger sind als die des ersten Kanals;
die zweite Steuereinheit C2 reserviert (918) das oder
die Subbänder des dritten Kanals, bereitet vor und
schickt (920) auf dem zweiten Signalisierungskanal eine vierte Nachricht zu dem Endgerät, die Informationen zu Identifikation des dritten Kanals und des oder der Subbänder aufweist, die dem dritten Kanal zugeteilt sind;
das Endgerät empfängt und dekodiert (924) die vierte Nachricht und speichert die Informationen über das oder
die neuen von der zweiten Steuereinheit C2 zugeteilten Subbänder und schickt danach (924) an die erste Steuereinheit C1 eine fünfte Meldenachricht, gemäß der es bereit ist, auf den dritten Kanal der zweiten virtuellen Zelle umzuschalten;
nachdem sie die fünfte Nachricht empfangen hat, schickt die erste Steuereinheit C1 (940) einen Befehl an die Mobilkommunikationsstation MSC, die zweite Verbindung zwischen der zweiten Steuereinheit C2 und dem Netzwerk mit hohem Durchsatz zu aktivieren, bereitet vor und
schickt (942) eine sechste ausersehene Nachricht, die einen Befehl zum Umschalten auf die zweite Steuereinheit C2 der zweiten virtuellen Zelle und zum Verwenden des dritten Übertragungskanals aufweist;
nach Empfang und Dekodieren der sechsten Nachricht führt das Endgerät (946) den Befehl zum Umschalten von dem ersten Kanal auf den dritten Kanal aus und schickt jede neue folgende Nachricht an die zweite Steuereinheit.

## Claims

1. A satellite cellular radio-communication system comprising:
a transparent communication satellite (6), serving as a relay, placed in a geostationary orbit or a highly inclined elliptical orbit,
at least one satellite access station (80, 82, 84), transmitting and receiving, configured to transmit and receive service and signal messages to and from the satellite (6) on a first bidirectional wireless way (25),
a set of user terminals (10, 12, 14) configured to receive and transmit the service and signal messages from and to the satellite (6) on a second bidirectional wireless way (44), the second bidirectional wireless way (44) being made up of a second outbound downlink (48) and a second inbound uplink (46),
at least one control unit (100, 102, 104) of a virtual cell (70, 72, 74) connected to one or more satellite access stations (80, 82, 84; 586), a virtual cell (70, 72, 74) being a set of frequency and spatial transmission resources,
the communication satellite (6) being configured to transmit on the second outbound downlink (48), and to receive on the second inbound uplink (46), the service and signal messages received and transmitted by the set of terminals, the service and signal messages being divided into a set of radio-communication satellite beams Fi (50),
each satellite beam (50) F(i) being identified by a first beam identification integer index i,
each satellite beam (50) F(i) defining, by its wireless range on the ground, a satellite coverage of a satellite cell, and being associated with the frequency band taken among a predetermined number Nb of different frequency bands B(k), each frequency band B(k) being identified by a second band identification integer index k, with k varying from 1 to Nb,
each frequency band B(k) being subdivided into one or more frequency sub-bands SB(k, j), each sub-band being identified by a pair of indices (k, j) in which k is the index of the band and j is an integer comprised between 1 and an integer Nsb(j) depending on k,
the set of satellite beams (50) being configured such that a band B(g(i)) allocated according to a distribution function g to any beam i is different from the bands associated with all of the beams adjacent to said any beam F(i), and
each satellite access station (80, 82, 84; 586) being associated with a different compact cluster (60, 62, 64) of at least two satellite beams, no cluster taken among any two clusters (60, 62, 64) having a shared beam,
**characterized in that**
a frequency and spatial transmission resource is a sub-band of index j of a band of index k assigned to a beam of index i and is associated with a triplet (i, k, j), and
a virtual cell (70, 72, 74) is a set of frequency and spatial transmission resources such that the set of beams to which they belong forms a compact set of beams, and
each terminal (10, 12, 14) is associated with a virtual cell and is configured to receive, from the control unit (100, 102, 104) of the associated virtual cell, and run a configuration command for a transmission channel to transmit and receive messages therein, the channel using at least two frequency and spatial resources at the same time having different band indices,
each control unit (100, 102, 104) of a virtual cell (70, 72, 74) is configured to manage the frequency and spatial resources of the virtual cell associated with it, and to make the messages received and transmitted by the terminals affected to the virtual cell of the control unit pass through.

2. The satellite cellular radio-communication system according to claim 1, wherein each sub-band has a wide bandwidth greater than or equal to 2.5 MHz, and each terminal (10, 12, 14) associated with the virtual cell is configured to measure the transmission quality of each sub-band of the virtual cell to which it belongs at the same time.

3. The satellite cellular radio-communication system according to any one of claims 1 and 2, **characterized in that** the number of sub-bands per frequency band is constant, and the sub-bands of a same band have the same width.

4. The satellite cellular radio-communication system according to any one of claims 1 to 3, wherein each control unit (100, 102, 104) of a virtual cell includes a different reference clock and is configured to synchronize the messages transmitted and received by each terminal of the associated virtual cell on the reference clock of the associated virtual cell.

5. The satellite cellular radio-communication system according to any one of claims 1 to 4, wherein
each satellite access station (80, 82, 84; 586) is configured to transmit and receive messages, corresponding to the associated cluster (60, 62, 64), and is connected to one or more control units (100, 102, 104) that manage the frequency and spatial resources whereof the beam indices correspond to the beams of the cluster (60, 62, 64) associated with the access station (80, 82, 84; 586).

6. The satellite cellular radio-communication system according to any one of claims 1 to 5, wherein a satellite access station (80, 82, 84) is served by at least two control units (100, 102, 104), and wherein at least one of the control units that serves the access station serves all of its frequency and spatial resources on the satellite access station (80, 82, 84).

7. The satellite cellular radio-communication system according to any one of claims 1 to 5, wherein a control unit (100, 102, 104) serves at least two access stations (80, 82, 84).

8. The satellite cellular radio-communication system according to any one of claims 1 to 5, wherein an access station (586) is served by a single control unit (102), and the control unit (102) serves only that access station (586).

9. A method for changing transmission resources within a same virtual cell during a communication of a terminal in a system according to any one of claims 1 to 8, comprising the following steps:
the terminal previously attached to a virtual cell has a first list of frequency sub-bands used in the virtual cell, and performs (802) a wide band measurement of the transmission quality of each sub-band of the virtual cell;
the terminal sends (802) the control unit of the virtual cell, through a first channel using one or more sub-bands of the virtual cell, a first message containing information representative of the quality of each sub-band administered by the control unit of the virtual cell;
the control unit, from the quality information of the sub-bands of the current virtual cell and a second list of free channels of the virtual cell, determines (808) the transmission parameters of a second channel comprising one or more sub-bands that corresponds to wireless reception conditions that are more favorable than those of the first channel, when such a second channel exists;
when a second channel exists, the control unit reserves (808) the sub-band(s) of the second channel, prepares and sends (810) a second message to the terminal containing identification information of the new sub-band(s) of the second transmission channel, and an order to switch from the first channel to the second channel;
after receiving and decoding the second message, the terminal executes (816) the order to switch from the first channel to the second channel and sends the satellite any new message using the sub-band(s) used by the second channel.

10. A method for changing transmission resources with switching from a first virtual cell to a second virtual cell during switching of a terminal in a system according to any one of claims 1 to 8, comprising the following steps:
the terminal previously attached to the first virtual cell has a first list of frequency sub-bands used in the first virtual cell, and performs a wide band measurement of the transmission quality of each sub-band of the first virtual cell;
the terminal sends (902) the first control unit C1, through a first transmission channel currently using one or more frequency sub-band(s) of the first virtual cell, a first message containing information representative of the quality of each sub-band administered by the first control unit of the first virtual cell currently in force;
then, the first control unit C1, from quality information of the sub-bands of the current first virtual cell and a set of second lists of sub-bands of adjacent virtual cells in terms of beams, determines (906) whether a second adjacent virtual cell exists in terms of beams capable of providing, for a long period, more favorable wireless reception conditions than those of any channel of the first virtual cell;
when such a second virtual cell exists, a new high throughput connection on the high throughput network side is prepared (908) by the mobile switching center MSC and the second control unit C2 associated with the second virtual cell, and the first control unit C1 sends (910) the terminal a second message comprising an order to prepare a switch to a second transmission channel, identification information for the second virtual cell to which to switch, and a third list of sub-bands to scan of the second virtual cell to perform a wide band measurement of the set of channels offered by the second virtual cell,
after receiving the second message, the terminal sends (914) the second control unit, through a second transmission channel, a third message containing information representative of the quality of each sub-band administered by the second control unit of the second virtual cell C2;
the second control unit C2, from quality information of the sub-bands of the second virtual cell architecture, determined and supplied by the terminal and a fourth list of free transmission channels of the second virtual cell, and determines (918) a third channel formed from one or more sub-bands comprised in the fourth list of free channels of the second virtual cell that corresponds to more favorable wireless reception conditions than those of the first channel;
the second control unit C2 reserves (918) the sub-band(s) of the third channel, prepares and sends (920), on the second signal channel, a fourth message to the terminal containing identification information of the third channel and the sub-band(s) allocated to the third channel;
the terminal receives and decodes (924) the fourth message, and stores the information on the new sub-band(s) assigned by the second control unit C2, then sends (924) the first control unit C1 a fifth announcement message that it is ready to switch to the third channel of the second virtual cell;
after having received the fifth message, the first control unit C1 sends (940) an order to the mobile switching center MSC to activate a second connection between the second control unit C2 and the high throughput network, prepares and sends (942) the terminal a sixth message containing an order to switch to the second control unit C2 of the second virtual cell and to use the third transmission channel;
after receiving and decoding the sixth message, the terminal executes (946) the switching order from the first channel to the third channel and sends any new message on the second control unit.
